(19) Europäisches Patentamt
European Patent Office
Office européen des brevets

(11) Veröffentlichungsnummer: **0 219 727 B1**

(12) # EUROPÄISCHE PATENTSCHRIFT

(45) Veröffentlichungstag der Patentschrift: **10.04.91**

(51) Int. Cl.⁵: **G06F 11/22**, G06F 15/40

(21) Anmeldenummer: **86113438.5**

(22) Anmeldetag: **30.09.86**

(54) **Verfahren zum Testen der logischen Konsistenz in Datenbanksystemen.**

(30) Priorität: **30.09.85 DE 3534917**

(43) Veröffentlichungstag der Anmeldung:
**29.04.87 Patentblatt 87/18**

(45) Bekanntmachung des Hinweises auf die Patenterteilung:
**10.04.91 Patentblatt 91/15**

(84) Benannte Vertragsstaaten:
**AT BE CH DE FR GB IT LI NL SE**

(56) Entgegenhaltungen:
**WO-A-84/02023**
**US-A- 4 130 867**

**THE BELL SYSTEM TECHNICAL JOURNAL, Band 62, Nr. 1, Januar 1983, Seiten 367-381, American Telephone and Telegraph Company, Murray Hill, US; J.L. QUINN et al.: "The 3B20D processor & DMERT operating system: diagnostic tests and control software"**

**PROCEEDINGS OF THE NATIONAL COMPUTER CONFERENCE, JOINT COMPUTER CONFERENCE, New York, US, 7.-10. Juni 1976, Band 45, Seiten 795-801, AFIPS, Montvale, US; M. HAMMER: "Error detection in data base systems"**

(73) Patentinhaber: **Siemens Aktiengesellschaft**
**Wittelsbacherplatz 2**
**W-8000 München 2(DE)**

(72) Erfinder: **Niemann, Michael**
**Sendl. Kirchplatz 3**
**W-8000 München 70(DE)**
Erfinder: **Hecht, Margarete**
**Rothuberweg 12**
**W-8000 München 82(DE)**
Erfinder: **Spenke, Hubert**
**Knappertsbuschstrasse 31**
**W-8000 München 81(DE)**
Erfinder: **Zangerl, Robert**
**Tucholskystrasse 16**
**W-8000 München 83(DE)**
Erfinder: **Beucke, Hubertus**
**Nelkenweg 5**
**W-8190 Wolfratshausen(DE)**
Erfinder: **Plank, Rudolf**
**Bischof-Hittostrasse 9**
**W-8011 Pliening(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services

INTERNATIONAL SYMPOSIUM ON FAULT-TOLERANT COMPUTING, Los Angeles, US, 28.-30. Juni 1977, Seiten 94-102, IEEE, New York, US; C. BELLON et al.: "On line test modeling in non-redundant distributed systems"

PROCEEDINGS OF THE NATIONAL COMPUTER CONFERENCE, New York, US, 7.-10. Juni 1976, Band 45, Seiten 1001-1006, AFIPS, Montvale, US; A. TANEDA et al.: "An on-line test program for peripheral devices"

**Beschreibung**

Die Erfindung betrifft ein Verfahren zum Testen der logischen Konsistenz in Datenbanksystemen gemäß dem Oberbegriff des Patentanspruches 1.

An Datenverarbeitungsanlagen werden in der Regel hohe Anforderungen bezüglich der Fehlersicherheit gestellt. Dies gilt insbesondere für Datenbanksysteme, da hierbei nicht nur das richtige funktionelle Arbeiten der Hardware, sondern darüber hinaus auch die logische Konsistenz des Datenbestandes sicherzustellen ist.

Die rechtzeitige Fehlererkennung ist daher für die Brauchbarkeit eines Datenbanksystems von herausragender Bedeutung, wie zum Beispiel in "Proceedings of the National Computer Conference - Joint Computer Conference", New York, 7. bis 10. Juni 1976, Bd. 45, Seiten 795 bis 801 ausführlich dargelegt ist. Dabei lassen sich verschiedene Arten von Fehlern unterscheiden, die von zunehmender Komplexität und schwer zu erkennen sind und auf die die Fehlererkennungsmechanismen während des laufenden Betriebes abgestellt sind, z.B. unzulässige Werte in einzelnen Feldern oder unzulässige Relationen der Werte verschiedener Felder usw., um im Fehlerfall rechtzeitig eingreifen zu können.

Unabhängig vom allgemeinen Transaktions- und Sicherungskonzept mit den entsprechenden Reaktionsmöglichkeiten, das jedem Datenbanksystem zugrundeliegt - man siehe zum Beispiel Siemens-Druckschrift U932-J1-Z55-2 "Verwalten und Bedienen", Kap. 2, ist es besonders wichtig, ein System bereits vor seinem Einsatz so weit auf seine Funktionstauglichkeit zu überprüfen, daß die Fehlerwahrscheinlichkeit beim aktuellen Einsatz äußerst gering ist. Funktionstests werden bereits vielfach mit Hilfe von Testprogrammen ausgeführt, mit denen die einzelnen Funktionen eines Systems überprüft werden - zum Beispiel EP-A2-0115566, Seiten 1 und 2. Derartige Funktionstests erfassen aber nicht die vollständige Arbeitsweise eines Datenbanksystems mit Mehrbenutzerbetrieb, bei dem mehrere Benutzer konkurrierend auf die Daten zugreifen können, da bedingt durch die vielfältigen Einflüsse beim Ablauf der einzelnen Benutzerprogramme ein genaues Testergebnis nicht vorausgesagt werden kann.

Es ist daher Aufgabe der Erfindung, ein Verfahren zum Testen eines Datenbanksystems vor dessen eigentlicher Inbetriebnahme zu schaffen, das bei konkurrierendem Betrieb eine automatische Prüfung der logischen Konsistenz eines Datenbanksystems unter anwendungsähnlichen Lastbedingungen ermöglicht.

Diese Aufgabe wird durch die kennzeichnenden Merkmale des Patentanspruches 1 gelöst. Ausgangspunkt ist danach eine aus synthetisch erzeugten Datensätzen aufgebaute Datenbank. In diesen Datensätzen können wahlweise Felder in vorgegebener Weise mit numerischen Werten belegt werden, die mit Werten anderer Felder desselben oder anderer Datensätze in einer vorgegebenen Beziehung stehen, so daß diese Beziehungen überprüfbar sind. Zum Beispiel müssen vorgegebene Felder innerhalb eines Datensatzes immer einen für alle diese Felder übereinstimmenden Wert aufweisen. Zugriffe zur Datenbank und Änderungen der Daten dürfen diese Beziehungen nicht verändern. Die für das Datenbanksystem vorgesehenen Änderungsbefehle kennen normalerweise diese Beziehungen nicht. Sie müssen daher mit Steuerungsfunktionen gekoppelt werden, die den vorgegebenen Beziehungen bei Ausführung einer ändernden Datenbankfunktion Rechnung tragen, und es müssen entsprechende Prüffunktionen vorgesehen werden, die die Einhaltung der vorgegebenen Beziehungen prüfen. Diese Steuerungs-und Prüffunktionen werden durch die auf die Datensätze abgestimmten Test- und Prüfprogramme bewirkt. Durch Einstufung dieser Programme als Anwenderprogramme können diese konkurrierend zueinander ablaufen und damit ein Mehrbenutzerbetrieb nachgebildet werden. Insbesondere können auch die Prüfprogramme konkurrierend zu den ändernden Testprogrammen ablaufen, so daß Fehler möglichst bald entdeckt werden können. Das Verfahren gemäß der Erfindung schafft daher die Möglichkeit, in einfacher Weise umfangreiche Funktionstests in Datenbanksystemen bei anwendungsähnlichen Lastbedingungen durchzuführen.

Ausgehend von diesem Grundprinzip ist eine Reihe von Abwandlungen möglich. So können in die eigentlichen Testprogramme zugleich Prüffunktionen eingefügt sein, zum Beispiel Feldvergleiche. Weiterhin kann die Last des Systems durch den Programmen zugeordnete Ablaufsteuerer in Form von Scheduler zur Begrenzung der pro Zeiteinheit auszuführenden Datenbankfunktionen gesteuert werden. Auch Multidatenbanksysteme mit mehreren Datenbanken, die zwar logisch und aus Benutzersicht weitgehend identisch sind, sich aber gegebenenfalls durch unterschiedliche Satzlängen und/oder Feldbelegungen sowie hinsichtlich ihrer physikalischen Speicherungsstruktur unterscheiden, lassen sich auf diese Weise testen. Werden dabei alle an einem Testlauf teilnehmenden Datenbanken in gleicher Weise geladen und geändert, dann kann durch ein abschließendes zusätzliches Prüfprogramm auch ein Vergleich der Datenbanken miteinander durchgeführt werden, indem die einander entsprechenden Datensätze in allen Datenbanken nacheinander fortlaufend auf Übereinstimmung überprüft werden.

Die Prüfungen richten sich in erster Linie auf die Prüfung von Feldinhalten innerhalb eines jeden Datensatzes hinsichtlich Übereinstimmung und/oder Einhaltung eines vorgegebenen Wertes oder auf die Überprüfung der Quersummen sowie innerhalb einer Datenbank auf die Prüfung der Satzbeziehungen untereinander, auf das richtige Abspeichern und Löschen von Datensätzen anhand von fortgeschriebenen Kontrollwerten und auf die richtige Verwaltung der Suchwege des Datenbanksystems.

Entsprechende Weiterbildungen sind Gegenstand der weiteren Patentansprüche 2 bis 20.

Einzelheiten der Erfindung seien nachfolgend anhand der Zeichnungen näher erläutert. Im einzelnen zeigen

FIG 1
die schematische Darstellung eines Datenbanksystems mit drei Datenbanken,

FIG 2
die Belegung der einzelnen Felder eines Datensatzes,

FIG 3A und 3B
ein Flußdiagramm für das Laden einer Datenbank mit Datensätzen gemäß FIG 2,

FIG 4
eine gegenüber FIG 1 erweiterte schematische Darstellung mit weiteren Einzelheiten des Testsystems,

FIG 5A und 5B
. ein Flußdiagramm für das Hauptprogramm des Testsystems von FIG 4 und

Fig 6A bis 6K
. Flußdiagramme für verschiedene Test- und Prüfprogramme des Testsystems von Fig 4.

FIG 1 zeigt den schematischen Aufbau eines Datenbanksystems, bestehend aus drei Datenbanken DB1 bis DB3 und dem übergeordneten Datenbank-Managementsystem DBMS mit angeschlossenem Monitor MON und dem Testprogrammsystem T-SYST als Anwenderprogrammpaket innerhalb eines nicht weiter gezeigten Rechnersystems. Derartige Datenbanksysteme sind allgemein bekannt. Eine umfassende Beschreibung eines solchen Datenbanksystems findet sich zum Beispiel in den Siemens-Druckschriften U929-J-Z55-1 (Entwerfen und Definieren), U930-J-Z55-1 (Anwendung und Programmieren), U931-J-Z55-1 (Aufbauen und Umstrukturieren) und U932-J1-Z55-2 (Verwalten und Bedienen), wozu eine Kurzübersicht in der Siemens Druckschrift U1432-J-Z53-1 (Das universelle Datenbanksystem UDS - Verfahrensbeschreibung) enthalten ist.

Ausgehend zum Beispiel von einem solchen Datenbanksystem sind nun die Datenbänke DB1 bis DB3 aus synthetischen Datensätzen aufzubauen, wobei z.B. zwischen drei verschiedenen Satzarten jeweils gleich strukturierter Datensätze in Form einer übergeordneten Satzart OWNER und zwei untergeordneten Satzarten MEMBER unterschieden wird. Jeder Datensatz der OWNER-Satzart kann zudem mit Datensätzen beider MEMBER-Satzarten verknüpft sein.

FIG 2 zeigt den schematischen Aufbau solcher synthetischer Datensätze DS mit den Bedeutungshinweisen für die einzelnen Felder F0 bis F29. Dabei bedeuten:

| | |
|---|---|
| Key... : | Schlüsselwerte |
| MS1-Z : | Anzahl der mit einem OWNER-Satz verknüpften MEMBER-Sätzen der MEMBER-Satzart 1 |
| MS2-Z : | Anzahl der mit einem OWNER-Satz verknüpften MEMBER-Sätze der MEMBER-Satzart 2 |
| OS-NR : | OWNER-Satz-Nummer SYST-DAT : Systemdaten, zum Beispiel Datenbankschlüssel |
| FWC : | Kontrollfeld für FWC-Zugriffe |
| DS-NR : | fortlaufende Datensatz-Nummer |
| S-QS : | Quersumme der Feldinhalte eines Satzes |
| X-TIME : | Zeitpunkt der letzten Änderung |
| X-DATE : | Datum der letzten Änderung |
| X-TYPE : | Art der Transaktion oder Änderung |
| DB-NR : | Datenbank-Nummer |
| ZW : | Zufallswert |

Im vorliegenden Falle sei angenommen, daß die Datensätze DS der drei Satzarten unterschiedlich lang sind und der OWNER-Satz insgesamt die Felder F0 bis F21 umfaßt, während die MEMBER-Sätze aus den Feldern F0 bis F25 bzw. F0 bis F29 bestehen, was durch den durchsätzlich gestrichelten Teil in FIG 2 angedeutet ist. Die Felder der verschieden langen Sätze sind im wesentlichen gleichartig belegt. Unterschiede ergeben sich dabei bezüglich der Felder F1 bis F3 abhängig von der Satzart. Beim OWNER-Satz ist in den Feldern F1 und F2 jeweils die Anzahl der MEMBER-Sätze MS1-Z für die Satzart 1 und MS2-Z für die MEMBER-Satzart 2 und im Feld F3 ein Zufallswert ZW abgespeichert. Beim MEMBER-Satz sind dagegen die Felder F1 und F2 mit einem Zufallswert ZW belegt, während im Feld F3 die Satznummer OS-NR des zugehörigen OWNER-Satzes abgespeichert wird. Außerdem sind die jeweils letzten Felder der Datensätze DS also F21 bzw. F25 bzw. F29 mit einem Schlüssel Key(Fx...) belegt, der jeweils dem Schlüssel Key1 und Key2 in den Feldern F0 und F7 entspricht. In gleicher Weise könnte in den Datensätzen einer oder mehrerer unterschiedlicher Satzarten in an sich bekannter Weise zusätzlich ein Datenfeld mit variabler Länge vorgesehen werden.

Die vorgegebenen Bedeutungsinhalte der einzelnen Felder sind in erster Linie von den Konsistenzprüfbedingungen abhängig.

Um das Abspeichern und das Löschen von Sätzen in der Datenbank zu prüfen, erhält jeder Satz jeder Satzart beim Laden der Datenbank eine lückenlos aufsteigend vergebene Satznummer DS-NR zugeordnet, die im Feld F13 abgespeichert wird. Dieses Feld wird niemals geändert, und es dürfen keine Duplikate dieses Wertes innerhalb einer Satzart auftreten. Beim Laden der Datenbank werden diese Satznummern pro Satzart addiert und die Summe in einem Kontrollfeld, das in einem anderen Bereich der Datenbank liegt, hinterlegt. Wird ein neuer Satz abgespeichert, so muß in der gleichen Transaktion das Kontrollfeld dieser Satzart um den Wert der Satznummer erhöht werden. Analoges gilt beim Löschen eines Satzes, indem das Kontrollfeld um den Wert der Satznummer des gelöschten Satzes vermindert wird. Zur Prüfung werden beispielsweise alle Sätze einer Satzart nacheinander gelesen, die Werte der Felder F13 addiert und die Summe mit dem Inhalt des Kontrollfeldes verglichen. Stimmen diese Summen nicht überein, so wurde mindestens ein Satz durch einen Fehler im Datenbanksystem überhaupt nicht oder falsch abgespeichert bzw. gelöscht.

Mit Hilfe der Felder, in denen die jeweilige Nummer des verknüpften OWNER-Satzes (OS-NR im Feld F3) bzw. die Anzahl der verknüpften MEMBER-Sätze je Satzart (MS1-Z in Feld F1 bzw. MS2-Z in Feld F2) abgespeichert ist, wird geprüft, ob die vom Datenbanksystem getroffene Verknüpfung von Sätzen korrekt hergestellt wurde. Die Prüfprogramme suchen daher zu den OWNER-Sätzen alle zugehörigen MEMBER-Sätze und vergleichen diese Ergebnisse mit den entsprechenden Werten in den einzelnen Datensätzen. Treten bei diesem Vergleich Fehler auf, so hat das Datenbanksystem eine Satzartverknüpfung nicht korrekt hergestellt. Wird daher die Satzartmitgliedschaft eines Satzes durch eines der Testprogramme des Testsystems geändert, dann müssen auch die entsprechenden Felder F1 bzw. F2 bzw. F3 modifiziert werden.

Zur Prüfung der "finish with cancel"-Funktion (FWC) enthält jeder Satz jeder Satzart ein Feld F6, das nur von Testtransaktionen modifiziert werden darf, die mit "Finish with cancel" enden, so daß alle durch die eingeleitete Transaktion vorgenommenen Änderungen wieder rückgängig zu machen sind. Der Wert des Feldes F6 ist beispielsweise immer "0", der bei Durchführung einer mit FWC gekoppelten Änderungsfunktion auf den Wert "1" gesetzt und mit Rückgängigmachung der Funktion wieder zum Wert "0" wird. Nach Abschluß einer Transaktion muß dieses Feld also stets dem ursprünglichen Wert "0" entsprechen. Ist dies nicht der Fall, wurde eine Transaktion vom Datenbanksystem fehlerhaft zurückgesetzt.

Um die Verwaltung von Suchwegen zu testen, enthält jede Satzart zwei Felder, zum Beispiel F10 und F11, die denselben Inhalt aufweisen, aber über verschiedenartige Suchwege prozessiert werden. Es werden daher stets beide Felder gleichzeitig in gleicher Weise geändert, um beide Tabellentypen zu verändern. Mit Leseprogrammen wird der Satz dann über beide Suchwege gesucht, wobei jeweils derselbe Satz gefunden werden muß.

Um das Abschneiden oder teilweise Überschreiben von Datensätzen festzustellen, werden zwei Prüfungen durchgeführt. Zum einen werden Felder mit gleichen Feldinhalten am Satzanfang (Feld F0), in der Satzmitte (zum Beispiel Feld F7) und am Satzende (zum Beispiel F21) abgespeichert. Diese Felder müssen durch die Testprogramme immer in gleicher Weise geändert werden, und zum anderen wird sowohl beim Einspeichern als auch beim Ändern eines Satzes über die belegten Felder des Datensatzes die Quersumme S-QS gebildet und im Satz (zum Beispiel Feld F14) abgespeichert. Zur Prüfung wird die Quersumme aus den Feldinhalten jeweils erneut berechnet und mit der im Datensatz gespeicherten Quersumme verglichen.

Beim Multidatenbankbetrieb können innerhalb einer Transaktion Sätze verschiedener Datenbänke bearbeitet werden. Jeder Datensatz der Testdatenbanken enthält daher ein Feld F18, in dem eine Datenbanknummer DB-NR abgespeichert wird. Stimmt bei der Überprüfung dieses Feldes der Wert nicht mit der für den Test vergebenen Nummer der Datenbank überein, so hat das Datenbanksystem den Satz in die falsche Datenbank eingespeichert. Es liegt wahrscheinlich ein Fehler in der Pufferverwaltung vor.

Um die Diagnose im Fehlerfall zu erleichtern, wird in jedem Datensatz das Datum X-DATE (Feld F16) und die Uhrzeit X-TIME (Feld F15) der letzten Änderung sowie die Art der Änderung X-TYPE (Feld F17) notiert.

Bei Verwendung von mehreren Datenbanken im Multidatenbankbetrieb ist der Aufbau der einzelnen Datenbanken weitgehend identisch. Jedoch können für die einzelnen Datensätze in den einzelnen Datenbanken ebenfalls unterschiedliche Satzlängen vorgesehen werden, was durch Einfügen von Blindfeldern erzielt wird. Auch können für die einzelnen Datenbanken unterschiedliche Speicherungstechniken mit unterschiedlichen Tabellenaufteilungen, unterschiedlichen Verkettungen der Datensätze und verschiedene Arten von Schlüsseltabellen verwendet werden. Trotz dieser physikalisch unterschiedlichen Datenbankstrukturen, die ein unterschiedliches Arbeiten des Datenmanagementsystems erfordern, werden jedoch die einzelnen Datenbanken aus Anwendersicht immer auf völlig identische Weise behandelt.

Entsprechend dem vorgegebenen Aufbau der synthetischen Datensätze DS von FIG 2 und den vorgegebenen Satzarten werden in an sich bekannter Weise die notwendigen Schema und Subschemata entworfen und die Datenbanken mit den vorhandenen Mitteln des Datenbanksystems aufgebaut, was in Kapitel 3 der vorgenannten Druckschrift U931-J-Z55-1 ausführlich beschrieben ist. Das nach dem Aufbau der Datenbanken notwendige Einspeichern der Daten für die synthetischen Datensätze und deren Verknüpfung übernimmt ein Ladeprogramm entsprechend dem Flußdiagramm von FIG 3A und FIG 3B, das für alle Datenbanken eines Multidatenbanksystems gleich und lediglich bezüglich der zugehörigen Datenbanknummer DB-NR unterschiedlich ist.

Vorgegeben werden dazu die Anzahl X der von allen Satzarten OS, MS1 und MS2 einzugebenden Datensätze DS, die Wertbereiche WB für die Schlüsselwerte Key1 bis Key8 = Key(Fx...) der Datensätze sowie die Anzahl Y der mit einem OWNER-Satz OS zu verknüpfenden MEMBER-Sätze MS1 der Satzart 1 und die Anzahl Z der mit einem OWNER-Satz OS zu verknüpfenden MEMBER-Sätze MS2 der Satzart 2.

Zunächst werden alle OWNER-Sätze OS gespeichert, wobei für den ersten OWNER-Satz die Schlüsselwerte Key1 bis Key8 den Anfangswerten der vorgegebenen Wertebereiche WB für diese Schlüssel entsprechen, während die Satznummer DS-NR = OS-NR des OWNER-Satzes von einem fortlaufenden Zähler, der zweckmäßig mit 1 beginnt, abgeleitet wird. Bei jedem nachfolgenden OWNER-Satz OS werden die Schlüsselwerte Key... und die Satznummer OS-NR dann jeweils fortlaufend aus den Werten des vorhergehenden Satzes innerhalb des jeweils gültigen Wertebereiches WB abgeleitet, zum Beispiel durch Addition bzw.auch Subtraktion einer "1". Zusätzlich zu diesen Felddaten wird dann jeweils die zugehörige Datenbanknummer DB-NR eingetragen, sowie die sich aus den Feldbelegungen ergebende Quersumme S-QS ermittelt und eingetragen. Weiterhin wird bei jedem eingespeicherten Datensatz in dem bereits erwähnten Kontrollfeld die vorgegebene Satznummer zur vorliegenden Summe ΣS-NR aller Satznummern addiert.

Sobald die vorgegebene Anzahl X von OWNER-Sätzen OS eingespeichert ist, werden in gleicher Weise alle MEMBER-Sätze MS1 der Satzart 1 und daran anschließend alle MEMBER-Sätze MS2 der Satzart 2 eingespeichert. Nach Einspeicherung aller Datensätze einer Datenbank werden dann in einem zweiten Teil des Programmablaufes die MEMBER-Sätze mit den OWNER-Sätzen verknüpft. Dazu wird jeweils der OWNER-Satz OS mit der niedrigsten Satznummer DS-NR und anschließend der MEMBER-Satz MS1 mit der niedrigsten Satznummer DS-NR gesucht und beide Sätze miteinander in an sich bekannter Weise verknüpft. Weiterhin wird jeweils im OWNER-Satz OS die Anzahl der MSW1-Z der mit diesem verknüpften MEMBER-Sätze und die infolge der Feldänderung sich ändernde Quersumme S-QS angepaßt. Außerdem wird jeweils im MEMBER-Satz die Satznummer als OS-NR des zugehörigen OWNER-Satzes eingetragen und demzufolge die Quersumme S-QS dieses Satzes ebenfalls angepaßt.

Ist die vorgegebene Anzahl Y der mit einem OWNER-Satz zu verknüpfenden MEMBER-Sätze MS1 nicht erreicht, wird der nächste freie MEMBER-Satz MS1 gesucht und dieser ebenfalls mit dem anfänglich gefundenen OWNER-Satz verknüpft, sowie die entsprechenden Feldwerte geändert. Ist dagegen die vorgegebene Anzahl Y der mit demselben OWNER-Satz verknüpften MEMBER-Sätze MS1 erreicht und sind noch freie MEMBER-Sätze vorhanden, dann muß erst ein neuer freier OWNER-Satz OS gesucht werden. Diese Prozedur wird nun fortgesetzt, bis kein freier MEMBERSatz MS1 oder kein freier OWNER-Satz OS mehr vorhanden ist. Danach wird auf die Verknüpfung der MEMBERSätze MS2 der zweiten Satzart mit den OWNER-Sätzen OS übergeleitet und dieselbe Verknüpfungsprozedur wie für die MEMBER-Sätze MS1 durchgeführt, bis ebenfalls kein freier MEMBER-Satz MS2 oder kein freier OWNER-Satz OS mehr vorhanden ist und daher das Ende des Einspeicherprogramms erreicht wird.

Aus dem Flußdiagramm von FIGF 3B ist entnehmbar, daß die Anzahl Y bzw. Z der MEMBER-Sätze MS1 bzw. MS2 größer sein kann als die Anzahl der verfügbaren OWNERSätze OS, so daß zunächst nicht für alle MEMBER-Sätze Satzbeziehungen hergestellt werden. Auch kann das Einspeicherprogramm ohne weiteres in der Weise abgewandelt werden, daß in einer Transkation jeweils nur eine begrenzte Anzahl von OWNER-Sätzen, zum Beispiel 50 Sätze, eingespeichert wird und anschließend je Transaktion jeweils nur eine der Anzahl der mit einem OWNER-Satz OS zu verknüpfenden MEMBER-Sätze MS1 bzw. MS2 entsprechende Anzahl von MEMBER-Sätzen eingegeben und jeweils sofort mit den OWNER-Sätzen verknüpft wird. Das Einspeicherprogramm ist damit in mehrere Transaktionen unterteilbar.

Ergänzend zu dem Datenbanksystem mit derartig aufgebauten Datenbanken, die aus eingespeicherten und miteinander verknüpften synthetischen Datensätzen entsprechend FIG 2 bestehen, ist ein den Anwenderprogrammen entsprechendes Programmpaket aus Test- und prüfprogrammen erforderlich, das das Testprogrammsystem T-SYST bildet. Dieses Programmpaket besteht aus einer Reihe von Hauptprogrammen, z.B. HP1 bis HPn mit jeweils einer der Anzahl der vorgesehenen Datenbanken, zum Beispiel DBA, DBB und DBC entsprechenden Anzahl von gleichartigen Unterprogrammen, zum Beispiel UP1 bis UP3, die sich lediglich durch ihren Aufrufnamen und den jeweiligen Datenbanknamen unterscheiden und die jeweils nur mit der zugehörigen Datenbank zusammenarbeiten. FIG 4 zeigt eine entsprechende schematische Darstellung in Anlehnung an Bild 7-3 auf Seite 7-6 der vorgenannten SiemensDruckschrift U930-J-Z55-1.

Die einzelnen Hauptprogramme HP... werden wie einzelne Anwenderprogramme im Mehrbenutzerbetrieb vom Datenbankmanagementsystem DBH zu Beginn eines Testlaufs oder einer Session aufgerufen und steuern dann den Aufruf der einzelnen Unterprogramme UP..., wobei dem Hauptprogramm über Parameter jeweils die Anzahl und die Reihenfolge der zu prozessierenden Datenbanken sowie die Länge der auszuführenden Transaktion mitgeteilt wird. Bei Beginn einer Transaktion werden dann die aktuelle Systemzeit und das Datum, sowie die Nummer der zu prozessierenden Datenbanken zusammen mit weiteren Parametern an die Unterprogramme übergeben. Dabei muß innerhalb einer Session die Reihenfolge der beteiligten Datenbanken für alle beteiligten Programme dieselbe sein, damit die Gleichbehandlung der Datenbanken gewahrt bleibt und die einander entsprechenden Datensätze der einzelnen Datenbanken miteinander verglichen werden können.

Die Steuerparamter für die Hauptprogramme HP... können zum Beispiel folgende Form aufweisen: XY (ABC), wobei XY die Anzahl der Durchläufe der angegeben Unterprogrammkette pro Transaktion und ABC die Reihenfolge der zu bearbeitenden Datenbanken DBA, DBB und DBC kennzeichnet.

Zur Lasterzeugung dienen zwei Arten von Unterprogrammen, nämlich die ändernden Testprogramme, die die Datenbanken mit Hilfe von sogenannten DML-Anweisungen von einem konsistenten Zustand in einen anderen konsistenten Zustand überführen, und Prüfprogramme, die die logische Konsistenz der an einem Testlauf beteiligten Datenbanken während des Testlaufs überprüfen. In FIG 4 sind dies die unter den Hauptprogrammen HP1 bis HPn ablaufenden Unterprogramme UP. Um während eines Testlaufs zugleich das richtige Auf- und Abbauen von Warteschlangen testen zu können, wird das zu testende Datenbanksystem zweckmäßig einer wechselnden Belastung ausgesetzt. Diese Funktion wird durch einen Ablaufüberwacher oder Scheduler SCHED je Programm gesteuert, der in der Lage ist, pro Anwender- oder Hauptprogramm HP... innerhalb einer vorgegebenen Zeitspanne nur eine vorgegebene Anzahl von DML-Anweisungen abzuwickeln, was durch entsprechende Eingaben für den Scheduler gesteuert wird, die aus einer vorgegebenen Datei abrufbar sind.

Für die vergleichende Prüfung der Datenbanken eines Multidatenbanksystems ist ein zusätzliches, im wesentlichen ähnlich aufgebautes Programm HP-P vorgesehen, das als letztes eines Testlaufes oder gesondert aufgerufen werden kann und insbesondere den datenbankübergreifenden Vergleich der einander entsprechenden Datensätze ausführt. Zugleich können dabei die einzelnen Datensätze für sich und die Summe der Datensatznummern je Datenbank anhand des Wertes in den gesonderten Kontrollfeldern überprüft werden, was durch entsprechende Eingaben an das Programm festgelegt wird.

FIG 5A und FIG 5B zeigt das Flußdiagramm für das Zusammenspiel der im Lasttest vom Datenbankmanagementsystem DBH aufrufbaren Hauptprogramme HP1 bis HPn mit ihren Unterprogrammen UP... Nach dem Aufruf eines Hauptprogrammes HPx nach Start einer Session erfragt dies zunächst die Eingabeparameter für die auszuführende Transaktion. Wie bereits erwähnt, handelt es sich dabei um Steuerparameter für das Hauptprogramm selbst, nämlich um Angaben über die Anzahl und Reihenfolge der zu prozessierenden Datenbanken und über die Länge der Transaktion. Zusätzlich kann eine Wartezeitangabe vorgegeben werden, die angibt, ob Programme nach Beendigung einer Transaktion entsprechend verzögert werden sollen, ehe sie eine neue Transkaktion beginnen. Weitere Parameter beziehen sich auf die Unterprogramme UP. Außer den bereits erwähnten allgemeinen Unterprogrammparamtern in Form von Datum, Uhrzeit und Datenbankkennzeichen sind dies die eigentlichen DML-bezogenen Unterprogrammparameter AWP-PARAM für die Festlegung der betroffenen Satzarten und der Suchbereiche sowie drei weitere Steuerparameter. Ein erster Steuerparameter davon kennzeichnet, ob es sich um einen ersten Durchlauf einer Programmkette handelt, so daß die Unterprogramme dann zusätzliche Einleitungsmaßnahmen durchführen müssen, wie zum Beispiel Prüfen der DML-bezogenen Parameter auf Korrektheit und Einstellen der Startwerte. Ein zweiter Steuerparameter kennzeichnet entsprechend Kapitel 3.1 bzw. 7.2.12 der Siemens-Druckschrift U930-J-Z55-1, daß zunächst mit einer READY-Anweisung die zugehörige Datenbank zu eröffnen ist, während ein dritter Steuerparameter anzeigt, daß das aufgerufene Unterprogramm eine FINISH-Anweisung zum Abschluß der Transaktion durchführen soll.

Umgekehrt meldet das Unterprogramm mit einer Abschlußstatusangabe RET-CODE Fehler oder Ablaufzustände an das Hauptprogramm. Zum Beispiel können folgende Zustände unterschieden werden:

0: alles in Ordnung, so daß das nächste Unterprogramm in der Verarbeitungskette aufgerufen werden kann.

1: AWP-PARAM ist falsch, es wird die Eingabe korrigierter Werte erwartet.

2: Es ist eine Systemverklemmung (DEADLOCK) aufgetreten, es ist daher eine neue Transkation zu starten.

3: Das Programm hat eine logische Inkonsistenz innerhalb der Datenbank festgestellt, die Session ist daher am Ende der Verarbeitungskette abzubrechen.

4: Es liegt ein Programmfehler vor, das Programm HPx ist daher abzubrechen.

5: Ende der Abarbeitung ohne Rücksicht auf das Erreichen des Endes der Verarbeitungskette.

6: Ende der Abarbeitung mit Weiterlauf bis zum Ende der Verarbeitungskette.

Nach Ermittlung der Parameter durch das aufgerufene Hauptprogramm HPx wird zunächst geprüft, ob eine Wartezeit vor Einleitung der Transaktion einzuhalten ist. Ist dies der Fall, dann wird der Ablaufüberwacher SCHED aufgerufen, der den Fortgang des Programms entsprechend verzögert und erst nach Ablauf der Wartezeit die Steuerung dem Hauptprogramm HPx wieder übergibt. Dies ruft dann entsprechend der Steuerungsvorgabe das Unterprogramm UPx/DB1 auf, das als erstes die zugehörige Datenbank, zum Beispiel DBA, des Systems bearbeitet, und übergibt diesem die benötigten Parameter AWP-PARAM. Beim erstmaligen Aufruf jedes der Unterprogramme im Rahmen einer Verarbeitungskette sind außerdem die ersten und zweiten Steuerparameter gesetzt. Mit dem anschließenden Rücksprung ins Hauptprogramm HPx geht dies in die Wartestellung über, bis das aufgerufene Unterprogramm UPx sich unter Angabe des Abschlußstatus RET-CODE zurückmeldet. Dieser wird nun vom Hauptprogramm HPx überprüft und der Fortgang des eingeleiteten zugehörigen Test- oder Prüfprogramms davon abhängig gemacht.

Meldet sich das Unterprogramm UPx mit RET-CODE = 0 zurück, dann wird auf das jeweils nächste Unterprogramm UPx/DB2 für die zweite in der Verarbeitungskette zu bearbeitende Datenbank übergeleitet, bis alle Unterprogramme UPx durchlaufen sind und der Zyklus gegebenenfalls von vorne beginnt, weil keine FINISHAnweisung vorlag. Sind weniger Datenbanken als die mögliche maximale Anzahl von Datenbanken für den Testlauf im Multidatenbanksystem vorgesehen, dann beginnt der Zyklus jeweils entsprechend früher, was in FIG 5A gestrichelt angedeutet ist.

Ist RET-CODE = 1, dann wird voraussetzungsgemäß eine erneute Ermittlung und Übergabe der Parameter AWP-PARAM angefordert, da die übergebenen Parameter nicht eindeutig waren. Dies trifft jeweils nur für das erste aufgerufene Unterprogramm, z.B. UPx/DB1, einer Verarbeitungskette zu, für das der erste Steuerparameter gesetzt ist.

Muß dagegen mit RET-CODE = 2 die eingeleitete Transaktion neu gestartet werden, dann werden die während der abzubrechenden Transaktionen bereits vorgenommenen Änderungen erst wieder rückgängig gemacht und die Transaktion noch einmal neu eingeleitet, ohne daß hierbei der erste Steuerparameter gesetzt wird.

Erfolgt die Rückmeldung eines der Unterprogramme UPx mit RET-CODE = 3, dann wurde eine Inkonsistenz innerhalb der gerade bearbeiteten Datenbank festgestellt, was normalerweise den Abbruch des Hauptprogrammes nach Beendigung der Verarbeitungskette und den Abbruch der laufenden Session veranlaßt. FIG 5B zeigt den entsprechenden weiteren Ablauf.

Beim Auftreten von RET-CODE = 3 wird daher geprüft, ob es sich im vorliegenden Fall um das letzte und wenn nicht, um das vorletzte Unterprogramm einer Verarbeitungskette handelt. Ist bereits das Unterprogramm UPx/DB3 für die letzte Datenbank des Systems aufgerufen, dann ist das Ende der Verarbeitungskette bereits erreicht. Im anderen Falle müssen die nachfolgenden Unterprogramme UPx/DB2 und/oder UPx/DB3 vom Hauptprogramm HPx erst noch aufgerufen werden.

Die Abschlußstatusangaben RET-COCE am Ende eines jeden aufgerufenen Unterprogrammes UPx/DB2 und oder UPx/DB3 werden in diesem Fall nur im begrenzten Umfang berücksichtigt. Nach jedem aufgerufenen Unterprogramm wird auf jeden Fall geprüft, ob RET-Code=2 vorliegt, da dann - wie bereits erläutert - die laufende Transkation zurückzusetzen und zu wiederholen ist. Lediglich in diesem Falle würde das Hauptprogramm HPx nicht angehalten und die Session wegen der festgestellten Inkonsistenz nicht abgebrochen, da bei Wiederholung der Transaktion die ursprünglich festgestellte Inkonsistenz wieder behoben sein kann. Es wird lediglich ein Fehlerhinweis ausgegeben, z.B. über den Monitor, der anzeigt, daß zwischenzeitlich ein Fehler vorlag.

Auch wird in jedem Fall geprüft, ob RET-CODE=4 oder RET-CODE=5 vorliegt, da dann das laufende Hauptprogramm HPx sofort abzubrechen ist. Ein Abbruch der Session wird dann nicht veranlaßt. In allen übrigen Fällen erfolgt dagegen auch ein Abbruch der Session, wobei man durch Überwachung der Abrufzweige, die in FIG 5B am unteren Ende mit X, Y und Z gekennzeichnet sind, zusätzlichen Aufschluß darüber erhalten kann, in welcher der Datenbanken die logische Inkonsistenz festgestellt wurde.

Der Abschlußstatus RET-Code=4 führt wegen eines Programmfehlers im als Anwenderprogramm laufenden Hauptprogramm HPx zum sofortigen Abbruch desselben mit der Folge, daß es während der laufenden Session nicht mehr berücksichtigt wird.

Die Rückmeldungen mit RET-CODE = 5 und RET-CODE = 6 kündigen das Ende der Abarbeitung an, wobei mit RET-CODE = 5 das Ende der Verarbeitungskette nicht erst abzuwarten ist, während mit RET-CODE = 6 die Verarbeitungskette erst noch beendet wird. Entsprechend wird wiederum geprüft, ob es sich um das letzte und/oder vorletzte Unterprogramm der Kette handelt, und es werden die jeweils noch ausstehenden Unterprogramme UPx/DB2 und/oder UPx/DB3 in der Kette nacheinander noch aufgerufen, bevor das Hauptprogramm HPx angehalten wird.

Beide Statusanzeigen können z.B. durch Administrator-Anweisungen zur Beendigung der Session ausgelöst werden - man siehe zum Beispiel Siemens Druckschrift U932-J1-Z55-2 Abschn. 3.2.4., während die Statusanzeige RET-CODE = 6 auch durch das Erreichen einer Endebedingung im Unterprogramm hervorgerufen werden kann. Dabei gewährleistet der Weiterlauf der Verarbeitungskette bis zu ihrem Ende die Gleichbehandlung aller am Testlauf teilnehmenden Datenbanken.

FIG 6A bis FIG 6K zeigen in Form von Flußdiagrammen verschiedene Änderungs- und Prüfprogramme, die als Unterprogramme UPx mit einem Hauptprogramm HPx zusammenarbeiten können, wobei - wie bereits erwähnt - je Unterprogrammtyp ein solches Hauptprogramm HPx vorzusehen ist und alle Hauptprogramme miteinander konkurrierend ablaufen. Die Änderungsprogramme bewirken dabei wie ändernde DML-Anweisungen mindestens eine vorübergehende Veränderung des Datenbestandes der zu bearbeitenden Datenbank, während die Prüfprogramme keinen Einfluß auf den Datenbestand haben.

Das in FIG 6A dargestellte Unterprogramm bezieht sich auf das "Ändern von Feldinhalten". Durch die Parameter AWP-PARAM wird dabei bestimmt, ob Datensätze DS der OWNER-Satzart OS oder der MEMBER-Satzarten MS1 bzw. MS2 bearbeitet werden sollen und wieviele Schleifen das Unterprogramm jeweils durchlaufen soll. Auch werden auf ermittelten Zufallswerten ZW beruhende Angaben, im vorliegenden Fall zum Beispiel die Nummern DS-NR des zu suchenden Datensatzes und die Werte für die Schlüssel Key1 bis Key8, zweckmäßig vorab vom Hauptprogramm HPx ermittelt und dann beim Multidatenbankbetrieb an alle Unterprogramme desselben Hauptprogramms übergeben, damit sichergestellt ist, daß alle Datenbanken gleich behandelt werden. Diese Werte können aber auch jeweils vom zuerst aufgerufenen Unterprogramm der Abarbeitungsfolge ermittelt werden und müssen dann von diesem an die übrigen Unterprogramme der Folge nacheinander übergeben werden.

Beim vorliegenden Unterprogramm UPx wird also zunächst ein Datensatz in der zugehörigen Datenbank aufgesucht, und zwar anhand eines vom Unterprogramm selbst ermittelten Zufallswertes oder der mitgeteilten Datensatznummer DS-NR. Sobald der entsprechende Datensatz aufgesucht ist, kann zunächst eine Prüfung innerhalb des Datensatzes vorgenommen werden, wobei die übereinstimmenden Felder miteinander verglichen werden, die Quersumme des Datensatzinhaltes neu ermittelt und mit der abgespeicherten S-QS verglichen wird sowie geprüft wird, ob die abgespeicherte Datenbanknummer DB-NR mit der zugehörigen Datenbank übereinstimmt und das Feld FWC den vorgegbenen Wert, z.B. "0", aufweist.

Ergibt die Prüfung einen Fehler, so wird das Unterprogramm sofort abgebrochen und ins Hauptprogramm HPx zurückgesprungen. Ist der Satz dagegen fehlerfrei, erfolgt die vorgesehene Änderung der Schlüsselwerte Key1 bis Key8 entsprechend den ermittelten zulässigen Zufallswerten ZW oder entsprechend den mitgeteilten Werten. Außerdem werden die Felder X-TYPE, X-DATE, X-TIME sowie S-QS nach Ermittlung der neuen Quersumme angepaßt. Anschließend wird dann geprüft, ob die Anzahl der vorgegebenen Schleifenläufe erreicht ist. Wenn ja, ist der Unterprogrammlauf beendet und es erfolgt der Rücksprung ins Hauptprogramm HPx. Andernfalls wird der nächste Datensatz gesucht usw..

Die im vorliegenden Fall vorgesehene interne Satzprüfung vor Durchführung der Veränderung von Feldinhalten ist nicht erforderlich. Dieser Programmteil ist daher gestrichelt dargestellt. Es ist aber ein Beispiel dafür, wie Prüfvorgänge in die Änderungsvorgänge eingefügt werden können, damit gegebenenfalls auftretende Fehler möglichst rechtzeitig erkannt werden.

Das in FIG 6B gezeigte Flußdiagramm entspricht in weiten Teilen dem von FIG 6A, da es ebenfalls das "Ändern von Feldinhalten" zum Gegenstand hat, allerdings mit Rückgängigmachung der Operation. Der erste Teil des Unterprogramms stimmt daher mit dem vorhergehenden überein, wobei die Funktion "Prüfen Satz", die in FIG 6A dazu angegebenen und bereits erläuterten Prüfungen umfaßt. Zusätzlich wird lediglich der Wert des Feldes FWC in den Wert "1" abgeändert.

Nach Durchführung der Änderung und der Anpassung der Feldinhalte werden diese jedoch nicht wie sonst üblich in den zugehörigen Datensatz der Datenbank eingetragen, sondern es werden alle Änderungen durch Einschreiben der alten Werte wieder rückgängig gemacht. Die Änderungsanweisung des Programms ist damit beendet. Hieran kann sich - wie gestrichelt angedeutet - eine weitere Prüfung anschließen, wonach der bearbeitete Datensatz erneut aufgesucht und daraufhin überprüft wird, ob dieser Datensatz tatsächlich die alten Feldinhalte unverändert aufweist. Fällt die Prüfung negativ aus, wird das Unterprogramm ebenfalls sofort abgebrochen und ins Hauptprogramm HPx zurückgesprungen.

Das Feld FWC des Datensatzes kann daher bei einem ordnungsgemäßen Arbeiten des Systems niemals den Änderungswert "1" aufweisen. Andererseits ist für diese Funktionsprüfung eine Änderung der Schlüsselwerte Key1 bis Key8 nicht erforderlich. Diese sind daher in Verbindung mit dem Änderungshinweis in Klammern gesetzt.

Eine weitere Gruppe von Unterprogrammen bezieht sich auf die Änderung von Satzbeziehungen. Beim Flußdiagramm nach FIG 6C sind MEMBER-Sätze der Satzart MS1 oder MS2 von ihren OWNER-Sätzen zu lösen. Als Parameter AWP-PARAM werden daher die Satzart MS1 oder MS2 benannt, sowie die Satznummern $DS\text{-}NR_{MIN}$ als Anfangswert, bei dem die Suche nach einem auszuhängenden Satz beginnen soll, und die Satznummer $DS\text{-}NR_{MAX}$ als Endwert, bei dem Suche nach einem auszuhängenden Satz beendet werden soll. Beide Werten können auch der Bereichsabgrenzung dienen, wenn die Satznummer durch einen Zufallsgenerator ermittelt werden soll. Außerdem wird mit der Angabe des Abstandes SW festgelegt, wie groß der Abstand der Datensatznummern zwischen zwei auszuhängenden Datensätzen sein soll. Dieser Wert kann eine Konstante sein, die fest vorgegeben oder durch einen Zufallsgenerator ermittelt wird, er kann aber auch jeweils neu durch einen Zufallsgenerator ermittelt werden. Hinzu kommt wiederum die Anzahl der Schleifenläuft als weitere Parametereingabe.

Sobald nach Start des Unterprogrammes ein Datensatz mit der vorgegebenen Datensatznummer DS-NR im vorgegebenen Bereich gefunden ist, wird geprüft, ob er mit einem OWNER-Satz OS verknüpft ist, denn nur verknüpfte MEMBER-Sätze MS können ausgehängt werden. Ist der gefundene MEMBER-Satz MS nicht verknüpft, wird anhand der Satznummber $DS\text{-}NR_{ALT}$ des gefundenen Satzes MS und dem Abstand SW die Satznummer $DS\text{-}NR_{NEU}$ für den nächsten aufzusuchenden Datensatz ermittelt und geprüft, ob dieser im vorgegebenen Bereich liegt. Ist diese Bedingung nicht eingehalten, startet das Unterprogramm von neuem, indem mit einem neuen Zufallswert ZW als Satznummer ein neuer Anfangssatz gesucht wird oder aber mit der alten Anfangssatznummer erneut begonnen und mit einer durch den Zufallsgenerator veränderten Schrittweite SW in eine andere Suchfolge übergeleitet wird. Mit fest vorgegebenen Werten $DS\text{-}NR_{MIN}$ und SW kann dagegen nur gearbeitet werden, wenn das Unterprogramm zwischenzeitlich unterbrochen werden kann und das konkurrierende Arbeiten des Einhängeprogramms gemäß FIG 6D die Möglichkeit schafft, daß zwischenzeitlich Datensätze eingehängt sind, die nunmehr wieder ausgehängt werden können. Eine derartige Programmunterbrechung kann herbeigeführt werden, wenn auch die Leerlaufschleife - wie gestrichelt angedeutet - in die Schleifenüberwachung mit einbezogen wird. Es bestehen also vielfache Variationsmöglichkeiten bezüglich der Programmausführung abhängig von der Parameterfestlegung.

Liegt die Satznummer $DS\text{-}NR_{NEU}$ innerhalb des vorgegebenen Bereiches, wird dieser Datensatz als nächster gesucht und auf die Verknüpfung mit einem OWNER-Satz untersucht. Fällt diese Prüfung positiv aus, wird zum Beispiel anhand der im MEMBER-Satz abgespeicherten Satznummer OS-NR der zugehörige OWNER-Satz gesucht. Im MEMBER-Satz MS werden dann die Satznummer OS-NR gelöscht, sowie die angegebenen Änderungen vorgenommen. Weiterhin werden im OWNER-Satz die Anzahl MS..-Z der verknüpften MEMBER-Sätze um 1 verringert und die angegebenen Felder modifiziert. Danach wird vom System die Verknüpfung zwischen beiden Sätzen in an sich bekannter Weise aufgehoben. Die Aushängefunktion ist damit beendet.

Anschließend kann - wie gestrichelt angedeutet - der alte MEMBER-Satz erneut aufgesucht und geprüft werden, ob die gelöschte Beziehung tatsächlich nicht mehr besteht, also das Feld für die Satznummer OS-NR auf Null gesetzt ist. Im Fehlerfall wird das Unterprogramm gleichfalls sofort abgebrochen, bei positivem Prüfergebnis dagegen erst nach Erreichen der Schleifenlaufzahl.

FIG 6D zeigt das Gegenstück zu FIG 6C, nämlich das Flußdiagramm für das "Einhängen von Sätzen". Da in diesem Falle auch OWNER-Sätze zu suchen sind, sind als zusätzliche Eingaben auch die Anfangs- und Endwerte für diese Satzart OS, sowie die Anzahl MS..-Z der mit einem OWNER-Satz OS maximal verknüpfbaren MEMBER-Sätze MS angegeben. Statt einer einheitlichen Schrittweite SW für die Folgesuche beider Satzarten können bei konstanter Schrittweite auch getrennte Werte $SW_{MS}$ und $SW_{OS}$ vorgegeben werden.

Wie beim Programm nach FIG 6C wird zunächst mit der Suche eines MEMBER-Satzes MS begonnen und dann geprüft, ob dieser bereits mit einem OWNER-Satz verknüpft ist. Ist dies der Fall, wird wie beim vorangehend beschriebenen Programm ein neuer MEMBER-Satz mit einer um die Schrittweite SW erhöhten Satznummer gesucht usw., bis ein freier MEMBER-Satz gefunden wird. Danach wird in analoger Weise ein OWNER-Satz gesucht und geprüft, ob der in dessem Feld MS1-Z bzw. MS2-Z gespeicherte Werte den vorgegebenen Wert $MS..\text{-}Z_{MAX}$ erreicht hat. Ist dies der Fall und der aufgesuchte OWNER-Satz OS daher nicht mehr weiter verfügbar, ist ein neuer OWNER-Satz unter Berücksichtigung der Schrittweite SW aufzusuchen und zu prüfen usw., bis ein verfügbarer OWNER-Satz gefunden ist. Im MEMBER-Satz ist dann die Satznummer des OWNER-Satzes als OS-NR einzutragen, während im OWNER-Satz der Wert des Feldes MS..-Z um 1 zu erhöhen ist. Hinzu kommen in beiden Fällen die angegebenen üblichen Änderungen.

Sobald diese Änderungen vorgenommen sind, wird die Verknüpfung zwischen dem MEMBER-Satz und dem OWNER-Satz durch das System hergestellt. Anschließend kann dann wie beim Aushängen durch ein erneutes Aufsuchen des MEMBERSatzes geprüft werden, ob die Satznummer des OWNER-Satzes im Feld OS-NR eingetragen ist, so daß im Fehlerfall das laufende Unterprogramm vorzeitig abgebrochen werden kann. Dies ist aber im vorliegenden Flußdiagramm nicht berücksichtigt. Im übrigen gilt bezüglich der jeweiligen Anfangs-und Endwerte und der Schrittweite analoges wie beim Aushängeprogramm gemäß FIG 6C. In Abwandlung des beschriebenen Programmes kann die Suche eines OWNER-Satzes auch vor der Suche eines MEMBER-Satzes vorgesehen werden.

Das Flußdiagramm gemäß FIG 6E für das Umhängen eines MEMBER-Satzes ist eine Kombination von Aushängen und Einhängen, wobei neben dem Trennen der Beziehung zwischen dem MEMBER-Satz und altem OWNER-Satz auch eine Verknüpfung des MEMBER-Satzes mit dem neuen OWNER-Satz durchzuführen ist.

In allen drei zuletzt beschriebenen Fällen des Aushängens, Einhängens oder Umhängens kann weiterhin, wie bei FIG 6A und FIG 6B, nach dem Aufsuchen eines Satzes jeweils erst eine Überprüfung des Dateninhaltes vorgesehen werden.

Beim Programm gemäß dem Flußdiagramm von FIG 6F werden MEMBER-Sätze MS gelöscht und mit geänderten Feldinhalten wieder gespeichert. Die Steuerparameter AWP-PARAM bezeichnen daher die Satzart MS1 oder MS2 und die Anzahl der Programmläufe. Der Ablauf ist ähnlich dem Beginn von FIG 6A, in dem beim ersten Unterprogramm einer Unterprogrammfolge ein MEMBER-Satz mit einem Zufallswert, der dann als Satznummer DS-NR an die anderen Unterprogramme weitergereicht wird, gesucht wird. Danach wird geprüft, ob der aufgesuchte MEMBERSatz mit einem OWNER-Satz verknüpft ist. Ist dies der Fall, wird dieser aufgesucht und neben den üblichen Feldänderungen die Anzahl der MEMBER-Sätze im Feld Feld MS..-Z um Eins verringert. Anschließend wird der MEMBER-Satz gelöscht und die zugehörige Satznummer vom Inhalt des gemeinsamen Kontrollfeldes ΣS-NR subtrahiert.

Danach wird wie beim Laden eines Datensatzes ein neuer MEMBER-Satz MS eingespeichert, der die Satznummer DS-NR des gelöschten MEMBER-Satzes erhält. Die Werte für die Schlüssel Key1 bis Key8 werden entsprechend den vom Zufallsgenerator gelieferten bzw. den übergebenen Werten eingespeichert und die üblichen Änderungen vorgenommen. Zusätzlich wird die Satznummer DS-NR zum Inhalt des Kontrollfeldes ΣS-NR addiert. War der gelöschte MEMBER-Satz mit einem OWNER-Satz verknüpft, dann wird diese Verknüpfung mit demselben OWNER-Satz wieder hergestellt, was zu entsprechenden Änderungen in diesem OWNER-Satz OS führt.

Mit dem Programm gemäß FIG 6G werden vollständige Satzmengen, d.h. OWNER-Sätze OS mit ihren verknüpften MEMBER-Sätzen MS, gelöscht und die Operation anschließend wieder rückgängig gemacht. Mit der Eingabe AWP-PARAM wird daher die Satzart OS mit einem Anfangswert $DS\text{-}NR_{MIN}$ und einem Endwert $DS\text{-}NR_{MAX}$ für die Bereichsfestlegung sowie der Abstand SW zwischen zwei aufeinanderfolgenden Sätzen und die Anzahl der Läufe vorgegeben. Die eigentliche Programmdurchführung beginnt entsprechend mit der Satznummer $DS\text{-}NR_{MIN}$ oder einem im vorgegebenen Bereich liegenden Zufallswert. Ist der gefundene OWNER-Satz OS mit keinem MEMBER-Satz MS verknüpft, wird in der gezeigten und bereits beschriebenen Weise ein neuer OWNER-Satz aufgesucht, bis ein erster, mit MEMBER-Sätzen verknüpfter OWNER-Satz gefunden wird. Der gefundene OWNER-Satz mit seinen MEMBER-Sätzen wird dann in an sich bekannter Weise durch das System gelöscht, wobei insbesondere im OWNER-Satz die Anzahl der verknüpften MEMBER-Sätze im Feld MS..-Z auf Null gesetzt und in den MEMBER-Sätzen im Feld OS-NR die Satznummer des OWNER-Satzes OS gelöscht wird. Außerdem wird bei allen Sätzen neben den üblichen Änderungen bezüglich X-TYPE, X-DATE, X-TIME und D-QS das Feld FWC auf 1 gesetzt. Außerdem wird das Kontrollfeld ΣS-NR durch Subtraktion der einzelnen Datensatznummern angepaßt.

Sobald alle diese durch die Änderungsfunktion ausgelösten Anpassungen vom System vorbereitend ausgeführt sind, erfolgt eine Prüfung, ob die Löschung auch korrekt ist, indem nach den gelöschten Sätze erneut gesucht wird. Wird dabei einer der gelöschten Sätze gefunden, wird wie in jedem Fehlerfall das laufende Unterprogramm sofort abgebrochen und ins Hauptprogramm HPx zurückgesprungen. Ist dagegen die Löschung korrekt durchgeführt worden, wird die gesamte Operation wieder rückgängig gemacht, indem nicht die aus der Löschfunktion sich ergebenden geänderten Feldinhalte in die betroffenen Datensätze eingetragen werden, sondern der vor der Änderung bestehende Zustand wieder hergestellt wird.

Daran kann sich eine weitere Prüfung anschließen, indem alle ursprünglich gelöschten Sätze erneut vom Programm gesucht werden. Sind alle Sätze vorhanden, ist die Löschoperation erfolgreich rückgängig gemacht worden und das Unterprogramm kann gegebenenfalls einen neuen Lauf beginnen. Zusätzlich kann mit der erneuten Suche aller Sätze auch eine Prüfung der internen Satzdaten bei allen aufgesuchten Datensätzen wie beim Programm nach FIG 6A verbunden werden, um insbesondere zu prüfen, ob das Feld FWC einheitlich wieder auf "0" gesetzt ist.

Bei den anhand von FIG 6A bis FIG 6G bisher erläuterten Unterprogrammen handelt es sich um Programme, bei denen in Anlehnung an DML-Änderungsanweisungen des Datenbanksystems Änderungen innerhalb des Datenbestandes der Datenbanken vorgenommen werden. Die nachfolgenden drei Programmbeispiele gemäß FIG 6H bis FIG 6K beziehen sich dagegen auf reine Prüfprogramme ohne Änderung des Datenbestandes, die aber konkurrierend mit den Änderungsprogrammen laufen.

Mit dem Programm gemäß FIG 6H werden die einzelnen Datensätze auf ihre Dateninhalte überprüft, was bereits zum Beispiel im Zusammenhang mit FIG 6A erläutert worden ist. Das Programm von FIG 6H stimmt daher weitgehend mit einem Teil des Programmes von FIG 6A überein, wobei zur Gewährleistung einer gezielteren Prüfung vorgegebener Bereiche ein Anfangs- und ein Endwert in Verbindung mit der Satzart sowie der Abstand SW für die Auswahl der nachfolgenden Datensatznummern DS-NR vorgegeben wird, was zu dem dargestellten Programmablauf führt.

Die beiden restlichen Programme gemäß FIG 6I und 6K beziehen sich auf die Prüfung der Satzbeziehungen, wobei einmal der OWNER-Satz OS und das andere Mal der MEMBER-Satz MS den Ausgangspunkt der Suche und Prüfung bildet. Im übrigen aber stimmen beide Programmabläufe weitgehend überein. Ausgehend von einem in einem durch die Anfangs- und Endwerte $DS\text{-}NR_{MIN}$ und $DS\text{-}NR_{MAX}$ vorgegebenen Bereich zunächst aufzusuchenden OWNER- bzw. MEMBER-Satz wird geprüft, ob überhaupt eine Verknüpfung besteht und die Prüfung daher durchgeführt werden kann. Je nachdem von welcher Satzart ausgegangen wird, werden dann alle zugehörigen MEMBER-Sätze gesucht und deren Anzahl mit dem Inhalt des Feldes MS..-Z im OWNER-Satz verglichen bzw. der zugehörige OWNER-Satz gesucht und dessen Satznummer mit der im MEMBER-Satz abgespeicherten OWNER-Satznummer OS-NR verglichen.

Sowohl durch den konkurrierenden Ablauf der Prüfprogramme als auch durch die in die verschiedenen Änderungsprogramme eingefügten Prüfungen besteht die Möglichkeit, gegebenenfalls auftretende Fehler unmittelbar nach ihrem Auftreten festzustellen und damit den Zusammenhang zu den vorgenommenen Änderungen zu sichern, so daß Rückschlüsse auf mögliche Fehlerquellen anhand der üblichen Aufzeichnungen und Ausgaben des angeschlossenen Monitors wesentlich erleichtert werden.

Für einen Testlauf oder eine Session des Datenbanksystems können die Hauptprogramme für die einzelnen Unterprogrammtypen in beliebiger Kombination geladen werden, wobei durch die angesprochenen Steuerparameter für die Hauptprogramme HPx, die Scheduler SCHED und die Unterprogramme UPx die Belastung des Datenbanksystems und die Länge der einzelnen Transaktionen in weiten Grenzen beeinflußt werden kann.

Neben den bereits besprochenen Programmen ist - wie bereits erwähnt, ein weiteres Prüfprogramm vorgesehen, das ähnlich den anderen Prüfprogrammen aufgebaut ist, aber außer Konkurrenz zu anderen Programmen abläuft. Es führt die Prüfung auf drei Ebenen durch:

1. Prüfung der einzelnen Datensätze anhand der satzinternen Daten entsprechend FIG 6H,
2. Prüfung der Summe der Datensatznummern anhand des Kontrollfeldes ΣS-NR innerhalb jeder Datenbank und
3. Prüfung der in den einzelnen Datenbanken einander entsprechenden Datensätze auf Gleichheit der abgespeicherten Daten.

Die Prüfung kann sich dabei wie bei den bereits erläuterten Programmen auf alle Datensätze aller Satzarten erstrecken oder auf vorgegebene Satzarten in einem durch Anfangs- und Endewert für die Satznummern festgelegten Bereich beschränkt werden.

Das Hauptprogramm wertet die vorgegebenen Parameter aus und spricht für das Aufsuchen eines Datensatzes und dessen interne Prüfung je Datenbank ein Unterprogramm an. Nach positivem Abschluß der internen Satzprüfung wird der jeweils gefundene Datensatz zwischengespeichert, so daß nach Vorliegen der einander korrespondierenden Datensätze aller Datenbanken ein Vergleich aller einzelnen Feldinhalte vom Hauptprogramm gesteuert durchgeführt werden kann. Danach werden durch erneuten Aufruf der Unterprogramme die nächsten Datensätze aufgesucht und geprüft usw., bis alle Datensätze oder die im vorgegebenen Bereich erfaßt sind. Außerdem werden, falls gefordert, die Satznummern aller aufgerufenen und geprüften Datensätze je Datenbank gesondert aufsummiert, so daß die aufgelaufenen Summenwerte am Ende des Prüflaufes mit den Werten der aufgerufenen Kontrollfelder ΣS-NR verglichen werden könen.

Durch ein zusätzliches Programm-Modul des Hauptprogramms wird außerdem veranlaßt, daß alle eine logische Inkonsistenz aufweisenden Datensätze in eine Prüfdatei mit Angabe des Fehlers übertragen werden, so daß zusammen mit den üblichen Protokollen gezielte Rückschlüsse auf die Funktionsfähigkeit des Multidatenbanksystems möglich sind.

Die vorangehend beschriebenen Progamme umfassen nur eine Auswahl an möglichen Programmen. Wie bereits erwähnt, sind diese Programme in vielfältiger Art abwandelbar. Auch können durch zusätzliche Programme weitere Funktionen des Datenbanksystems getestet und geprüft werden.

So kann z.B. die Auswahl von Datensätzen statt anhand der Datensatznummern DS-NR anhand eines der Schlüssel Key... im vorgegebenen Wertebereich WB, der gleichfalls durch Anfangs- und Endwert eingeschränkt werden kann, erfolgen.

Auch läßt sich hiervon ausgehend die Verwaltung der Systemtabellen durch das Datenbanksystem in einfacher Weise prüfen, indem die Satznummer des anhand des einen Schlüssels, z.B. Key5, eines Schlüsselpaares gefundenen Datensatzes zwischengespeichert wird und anschließend anhand des zweiten Schlüssels Key6 des Schlüsselpaares, das in inhaltsgleichen Feldern, z.B. F10 und F11, untergebraoht ist und innerhalb des Datensatzes immer denselben Wert aufweist, erneut gesucht wird. Die Satznummer des dann gefundenen Datensatzes muß dann mit der zwischengespeicherten Satznummer übereinstimmen, wenn die Tabellenverwaltung einwandfrei arbeitet.

Da abhängig von der Vorgabe der Wertebereiche WB für die Schlüsselwerte Key... ein und derselbe Schlüsselwert mehrfach vergeben werden kann, führt die Suche zum Auffinden nicht nur eines, sondern mehrerer Datensätze DS, die übereinstimmend auf beiden Suchpfaden gefunden werden müssen.

Durch Auswahl und Zusammenstellung insbesondere der möglichen Testprogramme für die einzelnen Testläufe lassen sich in Verbindung mit den vorgegebenen Parametern in einfacher Weise auch Schwerpunkte hinsichtlich der auszuführenden Funktionstests an Datenbanken mit ihrem Verwaltungs-und Steuerungssystem gezielt festlegen.

## Ansprüche

1. Verfahren zum Testen von Datenbanksystemen unter Verwendung von Datensätzen (DS) und Informationssätzen mindestens einer Datenbank (z.B. DB1), wobei wenigstens einige Felder (F...) jedes Datensatzes (DS) in vorgegebener Weise mit numerischen Werten belegt werden, die zu den Werten anderer Felder desselben Datensatzes oder anderer Datensätze bzw. der Informationssätze in vorgegebener, die logische Konsistenz sichernder Relation stehen, und unter Verwendung von vorgegebenen Testprogrammen, die auf die Datensätze (DS) der Datenbank (z.B. DB1) abgestimmt sind und zur Durchführung der üblichen ändernden Datenbankfunktionen entsprechend den verschiedenen Anweisungen der dem Datenbanksystem zugrundeliegenden Datenbankbehandlungssprache (DML-Anweisungen) ablaufbereit geladen werden,
**dadurch gekennzeichnet,**
- daß mit den vorhandenen Einrichtungen des Datenbanksystems mindestens eine Datenbank (z.B. DB1) mit synthetisch erzeugten Datensätzen (DS) und Informationssätzen aufgebaut wird,
- daß die Testprogramme für eine Folge von Datensätzen als Anwenderprogramme des Datenbanksystems ablaufbereit geladen werden, wobei jeder Art von Datenbankfunktion eines der Testprogramme entspricht, das neben der eigentlichen Datenbankfunktion (z.B. "EINHÄNGEN SATZ") jeweils Zusatzfunktionen (z.B. Ändern von vorgegebenen Feldinhalten) ausführt, durch die die numerischen Werte ausgewählter Felder (F...) des oder der jeweils betroffenen Datensätze bzw. Informationssätze in vorgegebener Weise erzeugt oder verändert werden,
- daß neben den Testprogrammen gleichfalls auf die synthetisch aufgebauten Datensätze (DS) der Datenbank (z.B. DB1) abgestimmte Prüfprogramme als weitere Anwenderprogramme zur Prüfung der durch die Testprogramme bewirkten Änderungen der Datenbank anhand der zugrundeliegenden Konsistenzbedingungen ablaufbereit geladen werden und
daß während des anschließenden Testlaufs alle ablaufbereit geladenen Anwenderprogramme konkurriernd miteinander ablaufen, wobei eine festgestellte Inkonsistenz der Datenbank zum Abbruch des Testlaufes mit gleichzeitiger Registrierung des Fehlers durch einen angeschlossenen Monitor führt.

2. Verfahren nach Anspruch 1, **dadurch gekennzeichnet**, daß gleichzeitig mehrere logisch identische Datenbanken (z.B. DB1 bis DB3) innerhalb des Datenbanksystems aufgebaut werden, wobei die Datensätze (DS) wahlweise unterschiedliche Satzlängen und Feldbelegungen je Datenbank aufweisen und die einzelnen Datenbanken wahlweise physikalisch unterschiedlich strukturiert sind, und daß jedes der Test- und Prüfprogramme der Anzahl der aufgebauten Datenbanken (z.B. DB1 bis DB3) entsprechend oft als Unterprogramm (z.B. UPx/DB1 bis UPx/DB3) in Verbindung mit jeweils einem übergeordneten Hauptprogramm (HPx) geladen wird, das abhängig von Parametern den Aufruf der zugehörigen, jeweils gleichen und jeweils eine der Datenbanken (z.B. DB1) individuell bearbeitenden Unterprogramme (z.B. UPx/DB1) steuert und den Umfang der durchzuführenden Test- bzw. Prüfläufe festlegt, so daß während eines Testlaufes alle daran beteiligten Datenbanken (z.B. DB1 bis DB3) durch den Lauf der Unterprogramme (z.B. UPx/DB1 bis UPx/DB3) desselben Hauptprogrammes (HPx) immer in übereinstimmender Weise bearbeitet werden.

**3.** Verfahren nach Anspruch 1 oder 2, **dadurch gekennzeichnet**, daß der Auf- und Abbau von Warteschlangen im Datenbanksystem während des Testlaufes durch den Test- und Prüfprogrammen bzw. jedem Hauptprogramm (HPx) zugeordnete Ablaufsteuerer (SCHED) beeinflußt wird, die die Anzahl der auszuführenden DML-Anweisungen je Zeiteinheit begrenzen.

**4.** Verfahren nach einem der Ansprüche 1 bis 3, **dadurch gekennzeichnet**, daß einzelne Prüffunktionen in die Testprogramme integriert ausgeführt werden.

**5.** Verfahren nach einem der Ansprüche 1 bis 4, **dadurch gekennzeichnet**, daß mit einem weiteren nicht konkurrierend arbeitenden Prüfprogramm am Ende eines Testlaufs eine Abschlußprüfung durchgeführt wird.

**6.** Verfahren nach Anspruch 5, **dadurch gekennzeichnet**, daß in die Abschlußprüfung datensatzübergreifende Prüfungen für alle Datensätze (DS) innerhalb einer Datenbank (z.B. DB1) einbezogen werden.

**7.** Verfahren nach Anspruch 5 oder 6 in Verbindung mit Anspruch 2, **dadurch gekennzeichnet**, daß beim Multidatenbankbetrieb in die Abschlußprüfung datenbankübergreifende Prüfungen einbezogen werden.

**8.** Verfahren nach einem der Ansprüche 1 bis 7, **dadurch gekennzeichnet**, daß in jedem Datensatz (DS) ein vorgegebenes Feld (z.B. F14) für die Speicherung der Quersumme (S-QS) der Feldinhalte vorgegebener Felder des Datensastzes (DS) verwendet wird, deren Informationsinhalt bei jeder Änderung innerhalb des Datensatzes angepaßt wird, und daß zur Prüfung des Datensatzes jeweils die Quersumme neu ermittelt und mit der gespeicherten Quersumme (S-QS) verglichen wird.

**9.** Verfahren nach einem der Ansprüche 1 bis 8, **dadurch gekennzeichnet**, daß in jedem Datenfeld (DS) ein Feld (z.B. F6) zur Kennzeichnung einer vorzunehmenden Änderung mit anschließender Rückgängigmachung derselben (FWC) verwendet wird, dessen Inhalt zu Beginn einer derartigen Scheinänderung von einem vorgegebenen Ausgangswert (z.B. "0") in einen anderen (z.B. "1") überführt und nach Rückgängigmachung der Änderung wieder in den Ausgangswert abgeändert wird, und daß zur Prüfung des Datensatzes (DS) dieses Feld (F6) auf das Vorliegen des Ausgangswertes überprüft wird.

**10.** Verfahren nach einem der Ansprüche 1 bis 9, **dadurch gekennzeichnet**, daß in jedem Datensatz (DS) wenigstens zwei inhaltsgleiche Felder (z.B. F10 und F11) verwendet werden, die immer mit gleichen Werten belegt und in gleicher Weise geändert werden, und daß zur Prüfung des Datensatzes inhaltsgleiche Felder jeweils auf Gleichheit der Feldinhalte überprüft werden.

**11.** Verfahren nach Anspruch 10, **dadurch gekennzeicnet**, daß die inhaltsgleichen Felder (z.B. F0, F7 und F21) jeweils am Anfang, in der Mitte und am Ende eines jeden Datensatzes (DS) vorgesehen werden.

**12.** Verfahren nach Anspruch 10 oder 11 in Verbindung mit Anspruch 8 und 9, **dadurch gekennzeichnet**, daß alle sich auf die Prüfung innerhalb eines Datensatzes (DS) beziehenden Prüfmaßnahmen (z.B. Feldvergleiche, Kontrolle des FWC-Feldes, Quersummenprüfung) in einem Prüfvorgang zusammengefaßt ausgeführt werden.

**13.** Verfahren nach einem der Ansprüche 1 bis 12, **dadurch gekennzeichnet**, daß alle Datensätze (DS) einer Datenbank (z.B. DB1) beim Aufbau der Datenbank fortlaufend numeriert werden und die Satznummer (DS-NR) jeweils in einem vorgegebenen Feld (z.B. F13) des zugehörigen Datensatzes (DS) abgespeichert wird.

**14.** Verfahren nach Anspruch 13 in Verbindung mit einem der Ansprüche 10 bis 12, **dadurch gekennzeichnet**, daß die Werte von inhaltsgleichen Feldern (z.B. F10 und F11) als Schlüssel (z.B. Key5 und Key6) verwendet werden, daß zur Prüfung der Tabellen des Datenbanksystems zunächst alle Datensätze (DS) einer Datenbank (z.B. DB1) anhand eines der Schlüssel (z.B. Key5) mit vorgegebenem Wert überprüft und die Satznummern (DS-NR) der gefundenen Datensätze (DS) zwischengespeichert werden und daß anschließend anhand des zweiten Schlüssels (z.B. Key6) mit demselben vorgegebenen Wert alle Datensätze (DS) der Datenbank (DB1) erneut überprüft und die Satznummer (DS-NR) der gefundenen Datensätze (DS) mit denen der zwischengespeicherten Satznummern verglichen werden.

**15.** Verfahren nach Anspruch 13 oder 14, **dadurch gekennzeichnet**, daß zur Kennzeichnung der Beziehung zwischen OWNER-Sätzen (OS) und MEMBER-Sätzen (MS1 bzw. MS2) in jedem OWNER-Satz (OS) jeweils ein Feld (z.B. F1 und F2) zur Kennzeichnung der Gesamtzahl (z.B. MS1-Z bzw. MS2-Z) der zugehörigen MEMBER-Sätze (MS1 bzw. MS2) je MEMBER-Satzart und in jedem MEMBER-Satz (MS1 oder MS2) jeweils ein Feld (z.B. F3) zur Aufnahme der Satznummer (OS-NR) des zugehörigen OWNER-Satzes (OS) verwendet wird, daß die Informationsinhalte dieser Felder bei jeder Änderung der Satzbeziehungen angepaßt werden und daß zur Prüfung der Satzbeziehungen aus der Sicht eines OWNER-Satzes (OS) alle mit diesem verknüpften MEMBER-Sätze (MS1 bzw. MS2) je MEMBER-Satzart ermittelt und die Anzahl der jeweils gefundenen MEMBER-Sätze (MS1 bzw. MS2) mit der im OWNER-Satz (OS) abgespeicherten Anzahl (MS1-Z bzw. MS2-Z) verglichen wird, während aus der Sicht der MEMBER-Sätze (MS1 bzw. MS2) der jeweils zugehörige OWNER-Satz (OS) ermittelt und die im MEMBER-Satz (MS1 bvzw. MS2) abgespeicherte Satznummer (OS-NR) mit der des jeweils gefundenen OWNER-Satzes (OS) verglichen wird.

**16.** Verfahren nach einem der Ansprüche 13 bis 15 in Verbindung mit Anspruch 6, **dadurch gekennzeichnet**, daß beim Aufbau einer Datenbank (z.B. DB1) die Datensatznummern (DS-NR) aller eingerichteten Datensätze (DS) insgesamt oder je Satzart (z.B. OS, MS1 und MS2) summiert und die resultierende Summe bzw. Summen ($\Sigma$S-NR) in zusätzlichen Informationssätzen der Datenbank (DB1) gespeichert werden, daß beim Löschen oder Speichern von Datensätzen (DS) die Summe ($\Sigma$S-NR) der Satznummern in den Informationssätzen entsprechend erniedrigt oder erhöht wird und daß zur Prüfung einer Datenbank (DB1) alle Datensätze (DS) dieser Datenbank nacheinander gelesen, die jeweils zugehörigen Satznummern (DS-NR) summiert und der erhaltene Summenwert mit dem abgespeichert Summenkontrollwert ($\Sigma$S-NR) verglichen wird.

**17.** Verfahren nach Anspruch 16 in Verbindung mit Anspruch 12, **dadurch gekennzeichnet**, daß während der Abschlußprüfung bei jedem aufgerufenen Datensatz (DS) zunächst alle sich auf die Prüfung innerhalb eines Datensatzes beziehenden Prüfmaßnahmen (z.B. Feldvergleiche, Kontrolle des FWC-Feldes, Quersummenprüfung) ausgeführt werden und daß bei Prüfung der gesamten Datenbank (z.B. DB1) die Satznummern (DS-NR) aller gelesenen Datensätze (DS) nacheinander insgesamt oder je Satzart summiert werden und der jeweilige Endwert mit dem abgespeicherten zugehörigen Summenkontrollwert ($\Sigma$S-NR) verglichen wird.

**18.** Verfahren nach einem der Ansprüche 12, 16 oder 17 in Verbindung mit Anspruch 7, **dadurch gekennzeichnet**, daß beim Multidatenbankbetrieb während der Abschlußprüfung jeweils die einander entsprechenden Datensätze der beteiligten Datenbanken (z.B. DB1 bis DB3) nacheinander aufgesucht und jeweils nach Ausführung der sich auf die Prüfung innerhalb eines Datensatzes beziehenden Prüfmaßnahmen vorübergehend zwischengespeichert werden und daß die zwischengespeicherten, einander ensprechenden Datensätze aller Datenbanken Feld für Feld miteinander verglichen werden.

**19.** Verfahren nach einem der Ansprüche 1 bis 18, **dadurch gekennzeichnet**, daß in jedem Datensatz (DS) vorgegebene Felder (z.B. F15 bis F17) für Angaben hinsichtlich der Art des einwirkenden Testprogrammes (X-TYPE) sowie hinsichtlich Uhrzeit (X-TIME) und Datum (X-DATE) der Einwirkung verwendet werden.

**20.** Verfahren nach einem der Ansprüche 2 bis 19, **dadurch gekennzeichnet**, daß beim Multidatenbankbetrieb in jedem Datensatz (DS) ein Feld (z.B. F18) für die Nummer (DB-NR) der zugehörigen Datenbank (z.B. DB1) verwendet wird, das zur Prüfung der Datenbankzugehörigkeit im Rahmen der internen Satzprüfung herangezogen wird.

## Claims

**1.** Method for testing database systems, using data records (DS) and information records of at least one database (for example DB1), in which method at least some fields (F...) of each data record (DS) are occupied in a predetermined manner with numeric values which have a predetermined relation to the values of other fields of the same data record or of other data records or of the information records which ensures the logic consistency, and using predetermined test programs which are adapted for the data records (DS) of the database (for example DB1) and are loaded ready to run for carrying out the usual modifying database functions in accordance with the various instructions of the database handling language (DML instructions) forming the basis of the database system, characterised
- in that, using the existing devices of the database system, at least one database (for example DB1) is built up with synthetically generated data records (DS) and information records,
- in that the test programs are loaded ready to run for a sequence of data records as user programs of the database system, each type of database function corresponding to one of the test programs which, in addition to the actual database function (for example in "INSERT RECORD") in each case carries out additional functions (for example modifying predetermined field contents), by means of which the numeric values of selected fields (F...) of the data record or information record or records concerned in each case are generated or modified in a predetermined manner,
- in that, in addition to the test programs, checking programs also adapted for the synthetically constructed data records (DS) of the database (for example DB1) are loaded ready to run as further user programs for checking the modifications of the database effected by the test programs by means of the consistency conditions used as a basis, and
- in that during the subsequent test run, all user programs loaded ready to run run in competition with one another, any inconsistency of the database found leading to a termination of the test run with simultaneous registration of the error by a connected monitor.

2. Method according to Claim 1, characterised in that at the same time several logically identical databases (for example DB1 to DB3) are built up within the database system, in which connection the data records (DS) optionally exhibit different lengths and field contents per database and the individual databases are optionally structured to be physically different, and in that each of the test and checking programs is loaded as many times as corresponds to the number of databases built up (for example DB1 to DB3) as subroutine (for example UPx/DB1 to UPx/DB3) in conjunction with in each case one higher-level main program (HPx) which, in dependence on parameters, controls the invocation of the associated subroutines (for example UPx/DB1) which are in each case identical and in each case individually process one of the databases (for example DB1), and determines the extent of the test or checking runs to be carried out, so that during a test run all databases (for example DB1 to DB3) involved in it are always processed in corresponding manner by the run of the subroutines (for example UPx/DB1 to UPx/DB3) of the same main program (HPx).

3. Method according to Claim 1 or 2, characterised in that the building-up and clearing of queues in the database system during the test run is influenced by sequence controls (SCHED) associated with the test and checking programs and each main program (HPx), which limit the number of DML instructions to be executed per unit time.

4. Method according to one of Claims 1 to 3, characterised in that individual checking functions are executed integrated into the test programs.

5. Method according to one of Claims 1 to 4, characterised in that a final check is carried out at the end of a test run by means of a further checking program which does not operate in competition.

6. Method according to Claim 5, characterised in that cross-data-record checks for all data records (DS) within one database (for example DB1) are included in the final check.

7. Method according to Claim 5 or 6 in conjunction with Claim 2, characterised in that cross-database checks are included in the final check in multi-database operation.

8. Method according to one of Claims 1 to 7, characterised in that in each data record (DS), a predetermined field (for example F14) is used for storing the checksum (S-QS) of the field contents of predetermined fields of the data record (DS), the information content of which is adapted with each change within the data record, and that for checking the data record, in each case the checksum is newly determined and compared with the stored checksum (S-QS).

9. Method according to one of Claims 1 to 8, characterised in that in each data record (PS), one field (for example F6) is used for identifying a change to be performed with subsequent cancellation of this change (FWC), the content of which, at the beginning of such an apparent change, changes from a predetermined initial value (for example "0") to another one (for example "1") and, after cancellation of the change, is changed back into the initial value and that for checking the data record (DS), this field (F6) is checked for the presence of the initial value.

**10.** Method according to one of Claims 1 to 9, characterised in that in each data record (DS), at least two fields (for example F10 and F11) of the same content are used which are always occupied with the same values and changed in the same manner and that for checking the data record, fields with the same content are in each case checked for equality of the field contents.

**11.** Method according to Claim 10, characterised in that the fields with the same content (for example F0, F7 and F21) are in each case provided at the beginning, in the middle and at the end of each data record (DS).

**12.** Method according to Claim 10 or 11 in conjunction with Claim 8 and 9, characterised in that all checking measures related to the checking within one data record (DS) (for example field comparisons, check of the FWC field, checksum check) are carried out combined in one checking process.

**13.** Method according to one of Claims 1 to 12, characterised in that all data records (DS) of one database (for example DB1) are continuously numbered during the building-up of the database and the record number (DS-NR) is in each case stored in a predetermined field (for example F13) of the associated data record (DS).

**14.** Method according to Claim 13 in conjunction with one of Claims 10 to 12, characterised in that the values of fields having the same content (for example F10 and F11) are used as keys (for example Key5 and Key6), in that for checking the tables of the database, firstly all data records (DS) of one database (for example DB1) are checked by means of one of the keys (for example Key5) having a predetermined value and the record numbers (DS-NR) of the data records found (DS) are temporarily stored, and in that subsequently all data records (DS) of the database (DB1) are again checked by means of the second key (for example Key6) with the same predetermined value and the record numbers (DS-NR) of the data records found (DS) are compared with those of the record numbers temporarily stored.

**15.** Method according to Claims 13 or 14, characterised in that, for identifying the relationship between OWNER records (OS) and MEMBER records (MS1 and MS2, respectively), in each OWNER record (OS) in each case one field (for example Fl and F2) is used for identifying the total number (for example MS1-Z and MS2-Z) of the associated MEMBER records (MS1 and MS2, respectively) per MEMBER type of record and in each MEMBER record (MS1 or MS2) in each case one field (for example F3) is used for accommodating the record number (OS-NR) of the associated OWNER record (OS), in that the information contents of these fields are adapted with each change in the record relations, and in that, for checking the record relations from the point of view of an OWNER record (OS), all MEMBER records (MS1 and MS2, respectively) combined with the former are determined per MEMBER type of record and the number of the MEMBER records found in each case (MS1 and MS2, respectively) is compared with the number (MS1-Z and MS2-Z) stored in the OWNER record (OS), whilst, from the point of view of the MEMBER records (MS1 and MS2, respectively), the in each case associated OWNER record (OS) is determined and the record number (OS-NR) stored in the MEMBER record (MS1 and MS2, respectively) is compared with that of the OWNER record (OS) found in each case.

**16.** Method according to one of Claims 13 to 15 in conjunction with Claim 6, characterised in that during the building-up of a database (for example DB1), the data record numbers (DS-NR) of all data records set up (DS) are summed overall or per type of record (for example OS, MS1 and MS2) and the resultant sum or sums (ΣS-NR) are stored in additional information records of the database (DB1), in that during the deletion or storage of data records (DS), the sum (ΣS-NR) of the record numbers in the information records is correspondingly decremented or incremented, and in that for checking a database (DB1), all data records (DS) of this database are successively read, the in each case associated record numbers (DS-NR) are summed and the sum value obtained is compared with the stored sum check value (ΣS-NR).

**17.** Method according to Claim 16 in conjunction with Claim 12, characterised in that during the final check, in each data record (DS) invoked, first all checking measures related to the checking within one data record (for example field comparisons, check of the FWC field, checksum check) are carried out, and in that during the checking of the entire database (for example DB1), the record numbers (DS-NR) for all data records (DS) read are successively summed in total or depending on the type of record, and the respective end value is compared with the stored associated sum check value (ΣS-NR).

**18.** Method according to one of Claims 12, 16 or 17 in conjunction with Claim 7, characterised in that in multidatabase operation, during the final check, in each case the mutually corresponding data records of the databases involved (for example DB1 to DB3) are successively searched and in each case after execution of the checking measures relating to the checking within one data record are temporarily stored, and in that the temporarily stored mutually corresponding data records of all databases are compared with each other field by field.

**19.** Method according to one of Claims 1 to 18, characterised in that fields (for example F15 to F17) predetermined in each data record (DS) are used for information with regard to the type of test program (X-TYPE) acting and with regard to clock time (X-TIME) and date (X-DATE) of the action.

**20.** Method according to one of Claims 2 to 19, characterised in that, in multi-database operation, one field (for example F18) in each data record (DS) is used for the number (DB-NR) of the associated database (for example DB1), which is used for checking the database association within the context of the internal record checking.

## Revendications

**1.** Procédé pour tester des systèmes de base de données moyennant l'utilisation d'ensembles de données (DS) et d'ensembles d'informations d'au moins une base de données (par exemple DB1), selon lequel au moins quelques zones (F...) de chaque base de données (DS) sont occupées de façon prédéterminée par des valeurs numériques, qui sont associées aux valeurs d'autres zones du même ensemble de données ou d'autres ensembles de données ou des ensembles d'informations conformément à une relation prédéterminée garantissant la compatibilité logique, et sont chargées, d'une manière prête pour l'exécution, moyennant l'utilisation de programmes prédéterminés d'essai, qui sont réglés sur les ensembles de données (DS) de la base de données (par exemple DB1), et pour la mise en oeuvre des autres fonctions variables des bases de données, conformément aux différentes indications du langage de traitement des bases de données (indications DML), sur laquelle est basé au départ le système des bases de données, caractérisé par le fait
- qu'avec les dispositifs existants du système de bases de données, au moins une base de données (par exemple DB1) est établie avec des ensembles de données (DS) et des ensembles d'informations, produits de façon synthétique,
- que les programmes d'essai pour une suite d'ensembles de donnés sont chargés en tant que programmes d'utilisateurs du système de bases de données, auquel cas chaque type de fonction de la base de données correspond à l'un des programmes d'essai, qui exécute, en-dehors de la fonction proprement dite des bases de données (par exemple "ACCROCHAGE DE L'ENSEMBLE") respectivement des fonctions supplémentaires (par exemple modification de contenus prédéterminés de zones), à l'aide desquelles les valeurs numériques de zones (F...) sélectionnées du ou des ensembles de données ou des ensembles d'informations respectivement considérés, sont produites ou modifiées d'une manière prédéterminée,
- qu'en-dehors des programmes d'essai, des programmes de contrôle, accordés également sur les ensembles de données (DS), établis de façon synthétique, de la base de données (par exemple DB1) sont chargés à l'état prêt pour l'exécution en tant qu'autres programmes d'utilisateurs pour le contrôle des modifications, provoquées par les programmes d'essai, de la base de données, compte tenu des conditions de compatibilité considérées à la base, et
que pendant la poursuite de l'essai, tous les programmes d'utilisateurs chargés et prêts pour l'exécution se déroulent simultanément, auquel cas une incompatibilité établie de la base de données conduit à l'interruption du déroulement de l'essai et à l'enregistrement simultané de l'erreur au moyen d'un moniteur raccordé.

**2.** Procédé suivant la revendication 1, caractérisé par le fait que simultanément plusieurs bases de données (par exemple DB1 à DB3), identiques du point de vue logique, sont établies à l'intérieur du système de bases de données, les ensembles de données (DS) possédant au choix différentes longueurs avec des occupations différentes des zones dans chaque base de données, et les différentes bases de données étant structurées au choix d'une manière différente du point de vue physique, et que chacun des programmes d'essai et de contrôle est chargé, avec une fréquence correspondant au nombre des bases de données établies (par exemple DB1 à DB3), en tant que sous-programme (par exemple UP x/DB1 à UP x/DB3) en liaison avec respectivement un programme principal de rang supérieur (HPx), qui commande, en fonction de paramètres, l'appel des sous-programmes associés (par exemple UPx/DB1), qui sont respectivement identiques et traitent individuellement respectivement l'une des bases de données (par exemple DB1), et fixe l'ampleur des cycles d'essai ou de contrôle devant être exécutés, de sorte que pendant l'exécution d'un essai, tous les programmes d'utilisateurs participants (par exemple DB1 à DB3) sont toujours traités de façon identique, au moyen de l'exécution des sous-programmes (par exemple UPx/DB1 à UPx/DB3) du même programme principal (HPx).

**3.** Procédé suivant la revendication 1 ou 2, caractérisé par le fait que l'établissment et la suppression de files d'attente dans le système de bases de données pendant l'exécution de l'essai est influencé par des dispositifs de commande d'exécution (SCHED) associés aux programmes d'essai ou de contrôle ou à chaque programme principal (HPx) et limitant le nombre des instructions (DML) devant être exécutées, par unité de temps.

**4.** Procédé suivant l'une des revendications 1 à 3, caractérisé par le fait que différentes fonctions de contrôle sont exécutées de façon intégrée dans les programmes d'essai.

**5.** Procédé suivant l'une des revendications 1 à 4, caractérisé par le fait qu'un contrôle d'arrêt est exécuté avec un autre programme de contrôle, qui n'est pas exécuté simultanément, à la fin d'un cycle d'essai.

**6.** Procédé suivant la revendication 5, caractérisé par le fait que des contrôles, qui sont appliqués à des ensembles de données lors du contrôle d'arrêt, sont insérés, pour tous les ensembles de données (DS), à l'intérieur d'une base de données (par exemple DB1).

**7.** Procédé suivant la revendication 5 ou 6, en liaison avec la revendication 2, caractérisé par le fait que des contrôles s'appliquant à des bases de données lors du contrôle d'arrêt sont insérés dans le fonctionnement de bases de données multiples.

**8.** Procédé suivant l'une des revendications 1 à 7, caractérisé par le fait que dans chaque ensemble de données (DS), on utilise une zone prédéterminée (par exemple F14) pour la mémorisation de la somme transversale (S-QS) des contenus de zones prédéterminées de l'ensemble de données (DS), dont le contenu en informations est adapté lors de chaque modification à l'intérieur de l'ensemble de données, et que pour le contrôle de l'ensemble de données, la somme transversale est à nouveau respectivement déterminée et est comparée à la somme transversale mémorisée (S-QS).

**9.** Procédé suivant l'une des revendications 1 à 8, caractérisé par le fait que dans chaque zone de données (DS), une zone (par exemple F6) est utilisée pour caractériser une modification devant être exécutée, avec une annulation ultérieure de cette modification (FWC), le contenu de cette zone étant commuté, au début d'une telle modification apparente, d'une valeur initiale prédéterminée (par exemple "0" sur une autre valeur (par exemple "1") et, avec retour à la valeur initiale après annulation de la modification, et que pour le contrôle de l'ensemble de données (DS), la présence de la valeur initiale est contrôlée dans cette zone (F6).

**10.** Procédé suivant l'une des revendications 1 à 9, caractérisé par le fait que dans chaque ensemble de données (DS), on utilise au moins deux zones (par exemple F10 et F11), qui possèdent des contenus identiques, sont toujours occupées par les mêmes valeurs et sont modifiées de la même manière, et que pour le contrôle de l'ensemble de données, le contenu respectif de zones ayant des contenus identiques est contrôlé.

**11.** Procédé suivant la revendication 10, caractérisé par le fait que les zones (par exemple F0,F7 et F21) ayant des contenus identiques sont prévus respectivement au début, au centre et à la fin de chaque ensemble de données (DS).

**12.** Procédé suivant la revendication 10 ou 11, en liaison avec les revendications 8 et 9, caractérisé par le fait que toutes les dispositions de contrôle se rapportant au contrôle exécuté à l'intérieur d'un ensemble de données (DS) (par exemple des comparaisons de zones, le contrôle de la zone FWC, le contrôle de la somme transversale) sont exécutées en étant réunies lors d'une opération de contrôle.

13. Procédé suivant l'une des revendications 1 à 12, caractérisé par le fait que tous les ensembles de données (DS) d'une base de données (par exemple DB1) sont numérotés d'une manière continue lors de l'établissement de la base de données et que le numéro (DS-NR) d'un ensemble est mémorisé respectivement dans une zone prédéterminée (par exemple F13) de l'ensemble associé de données (DS).

14. Procédé suivant la revendication 13 en liaison avec l'une des revendications 10 à 12, caractérisé par le fait que les valeurs de zones (par exemple F10 et F11), dont les contenus sont identiques, sont utilisés en tant que code (par exemple Key5 et Key6), que pour le contrôle des tableaux du système de bases de données, tout d'abord tous les ensembles de données (DS) d'une base de données (par exemple DB1) sont contrôlés sur la base d'un code (par exemple Key5) possédant la valeur prédéterminée et les numéros (DS-NR) des ensembles de données (DS) trouvés sont mémorisés temporairement et qu'ensuite, sur la base du second code (par exemple Key6) possédant la même valeur prédéterminée, tous les ensembles de données (DS) de la base de données (DB) sont à nouveau contrôlés et les numéros (DS-NR) des ensembles de données (DS) trouvés sont comparés à ceux des numéros d'ensembles mémorisés temporairement.

15. Procédé suivant la revendication 13 ou 14, caractérisé par le fait que pour l'identification de la relation entre des ensembles OWNER (OS) et des ensembles MEMBER (MS1 ou MS2) dans chaque ensemble OWNER (OS), on utilise respectivement une zone (par exemple F1 et F2) servant à identifier le nombre total (par exemple MS1-Z ou MS2-Z) des ensembles MEMBER associés (MS1 ou MS2) pour chaque type d'ensemble MEMBER, et dans chaque ensemble MEMBER (MS1 ou MS2) on utilise respectivement une zone (par exemple F3) servant à recevoir le numéro (OS-NR) de l'ensemble OWNER (OS) associé, que les contenus en informations de ces zones sont adaptés lors de chaque modification des relations entre ensembles et que pour le contrôle des relations entre ensembles du point de vue d'un ensemble OWNER (OS), tous les ensembles MEMBER combinés (MS1 ou MS2) sont déterminés pour chaque type d'ensemble MEMBER et le nombre des ensembles MEMBER (MS1 ou MS2) respectivement trouvés est comparé au nombre (MS1-Z ou MS2-Z) mémorisé dans l'ensemble OWNER (OS), tandis que du point de vue des ensembles MEMBER (MS1 ou MS2), l'ensemble OWNER (OS) respectivement associé est déterminé et le numéro (OS-NR) mémorisé dans l'ensemble MEMBER (MS1 ou MS2) est comparé à l'ensemble OWNER (OS) respectivement trouvé.

16. Procédé suivant l'une des revendications 13 à 15 en liaison avec la revendication 6, caractérisé par le fait que lors de l'établissement d'une base de données (par exemple DB1), les numéros (DS-NR) de tous les ensembles de données (DS) rangés sont additionnés globalement ou pour chaque type d'ensembles (par exemple OS, MS1 et MS2) et que la ou les sommes résultantes (ΣS-NR) sont mémorisées dans des ensembles supplémentaires d'informations de la base de données (DB1), que lors de l'effacement ou de la mémorisation de l'ensemble de données (DS), la somme (ΣS-NR) des numéros des ensembles est réduite ou accrue de façon correspondante dans les ensembles d'informations et que pour le contrôle d'une base de données (DB1), tous les ensembles de données (DS) de cette base de données sont lus successivement, les numéros respectivement associés (DS-NR) des ensembles sont additionnés et la valeur somme obtenue est comparée à la valeur de contrôle somme mémorisée (ΣS-NR).

17. Procédé suivant la revendication 16 en liaison avec la revendication 12, caractérisé par le fait que pendant le contrôle d'arrêt, pour chaque ensemble de données appelé (DS), tout d'abord toutes les dispositions de contrôle se rapportant au contrôle à l'intérieur d'un ensemble de données (par exemple comparaisons de zones, contrôles de la zone FWC, contrôle de la somme transversale) sont exécutées et que lors du contrôle de l'ensemble de la base de données (par exemple DB1), les numéros (DS-NR) de tous les ensembles lus de données (DS) sont additionnés successivement ou globalement pour chaque type d'ensemble et que la valeur finale respective est comparée à la valeur de contrôle somme associée mémorisée (ΣS-NR).

18. Procédé suivant l'une des revendications 12,16 ou 17 en liaison avec la revendication 7, caractérisé par le fait que, lors du fonctionnement de la base de données multiples, pendant le contrôle d'arrêt, respectivement les ensembles de données, qui se correspondent réciproquement, des bases de données participantes (par exemple DB1 à DB3) sont recherchés successivement et sont mémorisés temporairement après l'exécution des distributions de contrôle se rapportant au contrôle à l'intérieur d'un ensemble de données, et que les ensembles de données mémorisés temporairement, qui se correspondent entre eux, de toutes les bases de données, sont comparées entre elles zone pour zone.

**19.** Procédé suivant l'une des revendications 1 à 18, caractérisé par le fait que dans chaque ensemble de données (DS), des zones prédéterminées (par exemple F15 à F17) sont utilisées, pour des indications concernant le type du programme d'essai actif (X-TYPE) et concernant l'heure (X-TIME) et la date (X-DATE) de l'action.

**20.** Procédé suivant l'une des revendications 2 à 19, caractérisé par le fait que dans le cas du fonctionnement de la base de données multiples, dans chaque ensemble de données (DS) une zone (par exemple 18) est utilisée pour le numéro (DB-NR) de la base associée de données (par exemple DB1), cette zone étant utilisée pour contrôler l'appartenance à la base de données dans le cadre du contrôle interne d'ensembles.

FIG 1

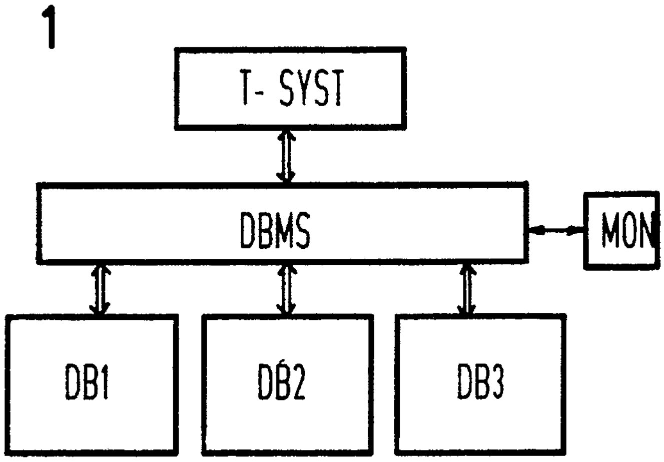


FIG 2

DS

| | |
|---|---|
| F0 : Key1=Key2=Key(Fx) | F1 : MS1-Z (ZW) |
| F2 : MS2-Z (ZW) | F3 : ZW (OS-NR) |
| F4 : ZW | F5 : Syst-DAT |
| F6 : ∅ (FWC) | F7 : Key2=Key1=Key(Fx) |
| F8 : Key3=Key4=Key7 | F9 :Key4=Key3=Key7 |
| F10 : Key5=Key6 | F11 : Key6=Key5 |
| F12 : Key7=Key3=Key4 | F13 : DS-NR |
| F14 : S-QS | F15 : X-TIME |
| F16 : X-DATE | F17 : X-TYPE |
| F18 : DB-NR | F19 : ZW |
| F20 : ZW | F21 : Key(Fx1)=Key1=Key2 |
| F22 : ZW | F23 : ZW |
| F24 : ZW | F25 : Key(Fx2) |
| F26 : ZW | F27 : ZW |
| F28 : ZW | F29 : Key(Fx3) |

FIG 3A

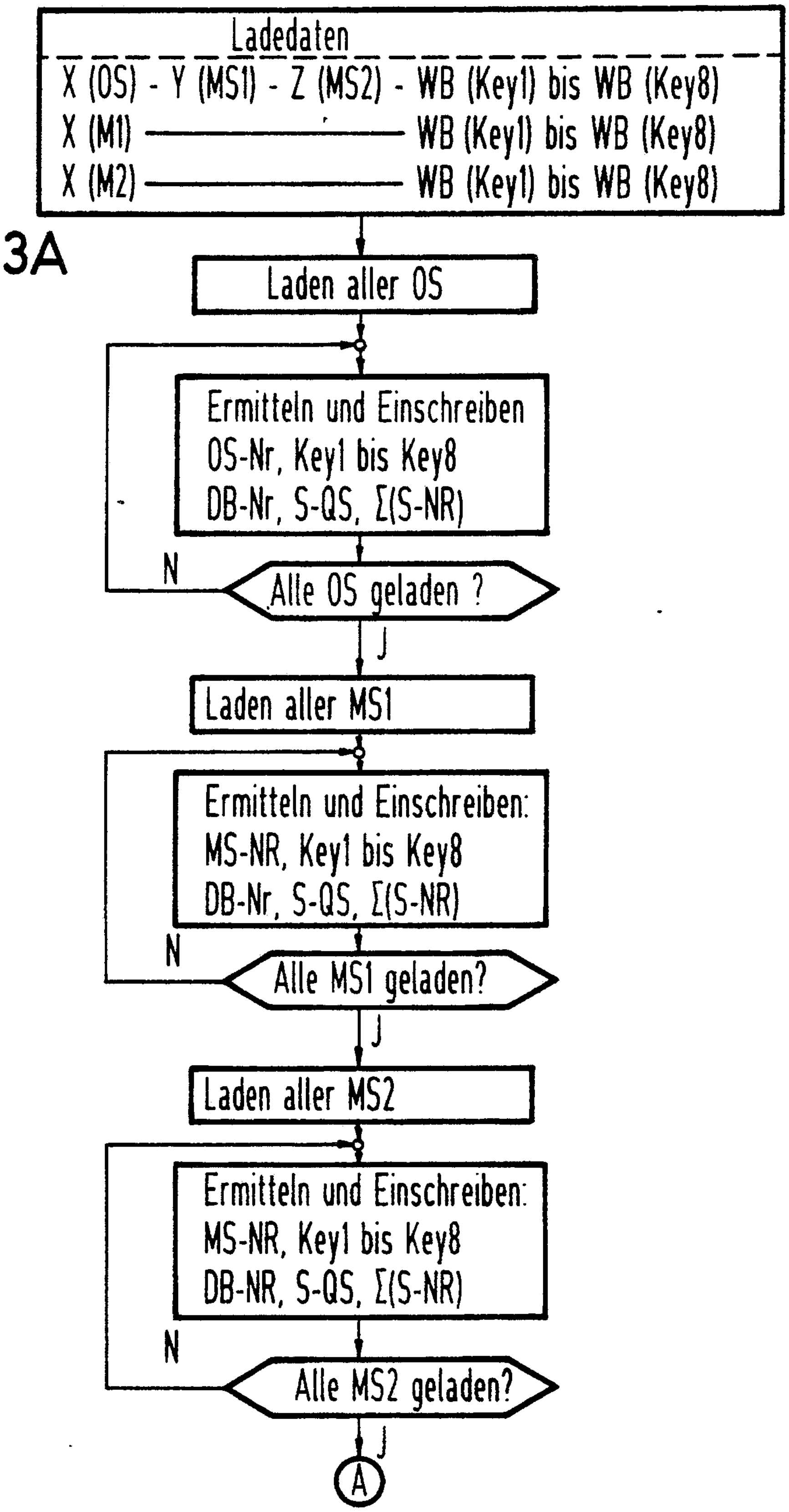
Ladedaten
X (OS) - Y (MS1) - Z (MS2) - WB (Key1) bis WB (Key8)
X (M1) WB (Key1) bis WB (Key8)
X (M2) WB (Key1) bis WB (Key8)
Laden aller OS
Ermitteln und Einschreiben
OS-Nr, Key1 bis Key8
DB-Nr, S-QS, Σ(S-NR)
N
Alle OS geladen ?
J
Laden aller MS1
Ermitteln und Einschreiben:
MS-NR, Key1 bis Key8
DB-Nr, S-QS, Σ(S-NR)
N
Alle MS1 geladen?
J
Laden aller MS2
Ermitteln und Einschreiben:
MS-NR, Key1 bis Key8
DB-NR, S-QS, Σ(S-NR)
N
Alle MS2 geladen?
J
A

FIG 3B

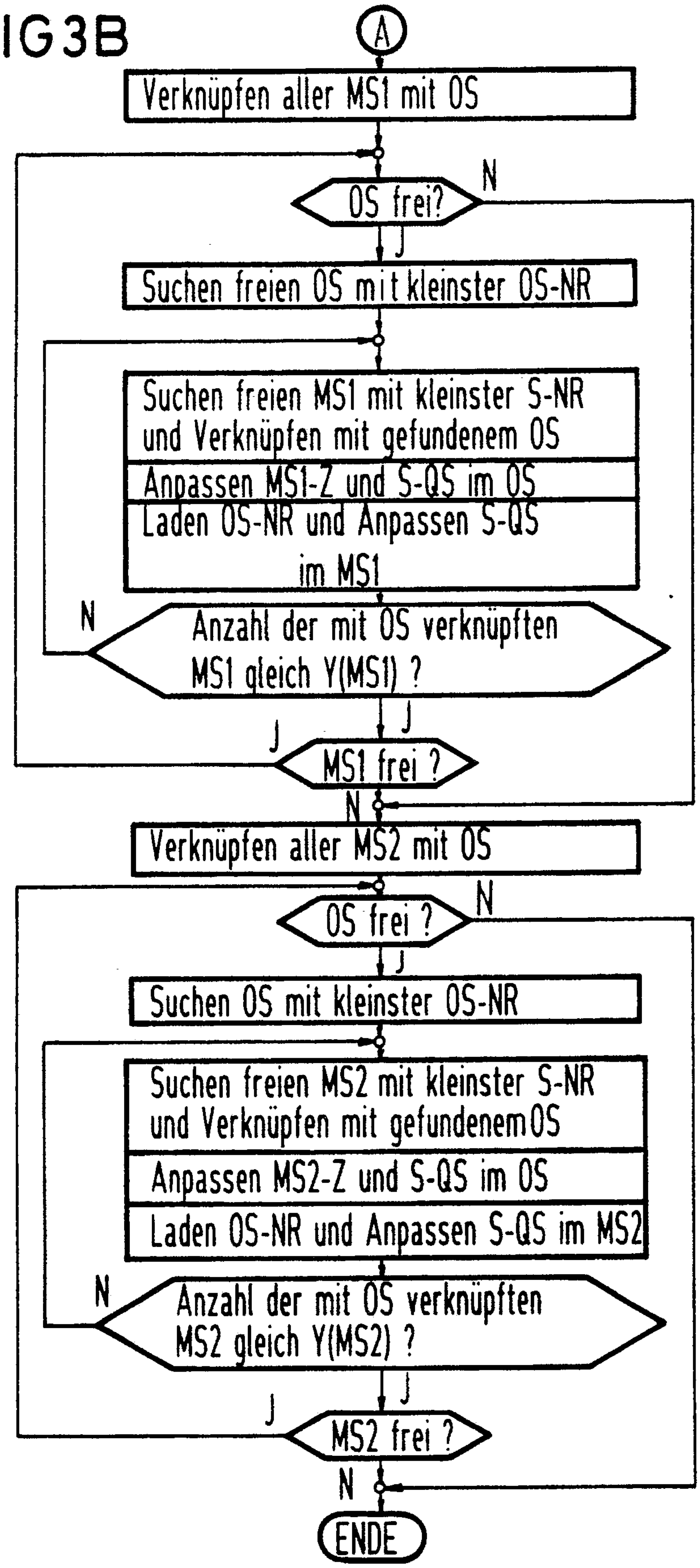
A
Verknüpfen aller MS1 mit OS
OS frei?
N
J
Suchen freien OS mit kleinster OS-NR
Suchen freien MS1 mit kleinster S-NR und Verknüpfen mit gefundenem OS
Anpassen MS1-Z und S-QS im OS
Laden OS-NR und Anpassen S-QS im MS1
N
Anzahl der mit OS verknüpften MS1 gleich Y(MS1) ?
J
J
MS1 frei ?
N
Verknüpfen aller MS2 mit OS
OS frei ?
N
J
Suchen OS mit kleinster OS-NR
Suchen freien MS2 mit kleinster S-NR und Verknüpfen mit gefundenem OS
Anpassen MS2-Z und S-QS im OS
Laden OS-NR und Anpassen S-QS im MS2
N
Anzahl der mit OS verknüpften MS2 gleich Y(MS2) ?
J
J
MS2 frei ?
N
ENDE

FIG 4

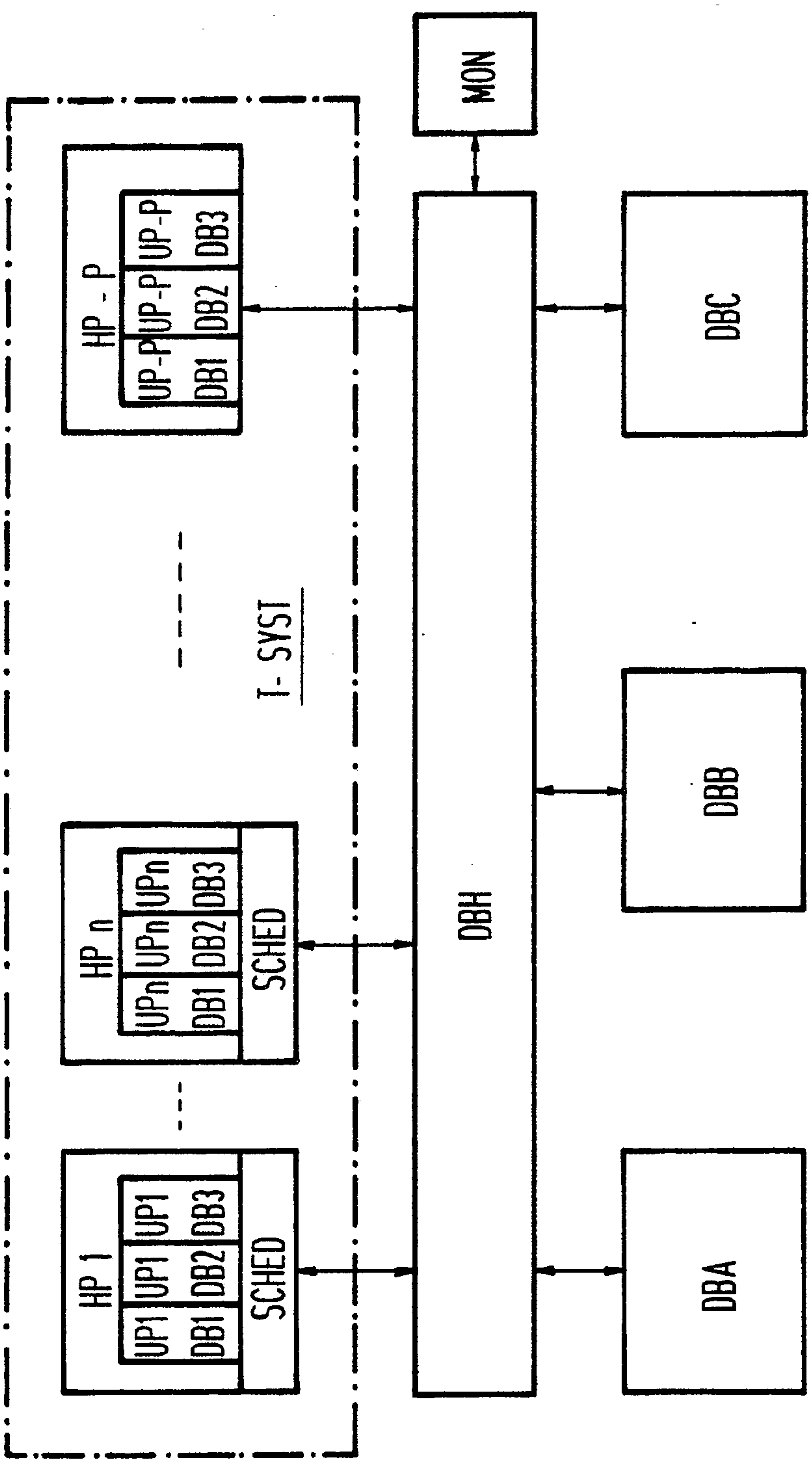
HP 1
UP1
UP1
UP1
DB1
DB2
DB3
SCHED
HP n
UPn
UPn
UPn
DB1
DB2
DB3
SCHED
HP - P
UP-P
UP-P
UP-P
DB1
DB2
DB3
T- SYST
MON
DBH
DBA
DBB
DBC

FIG 5A

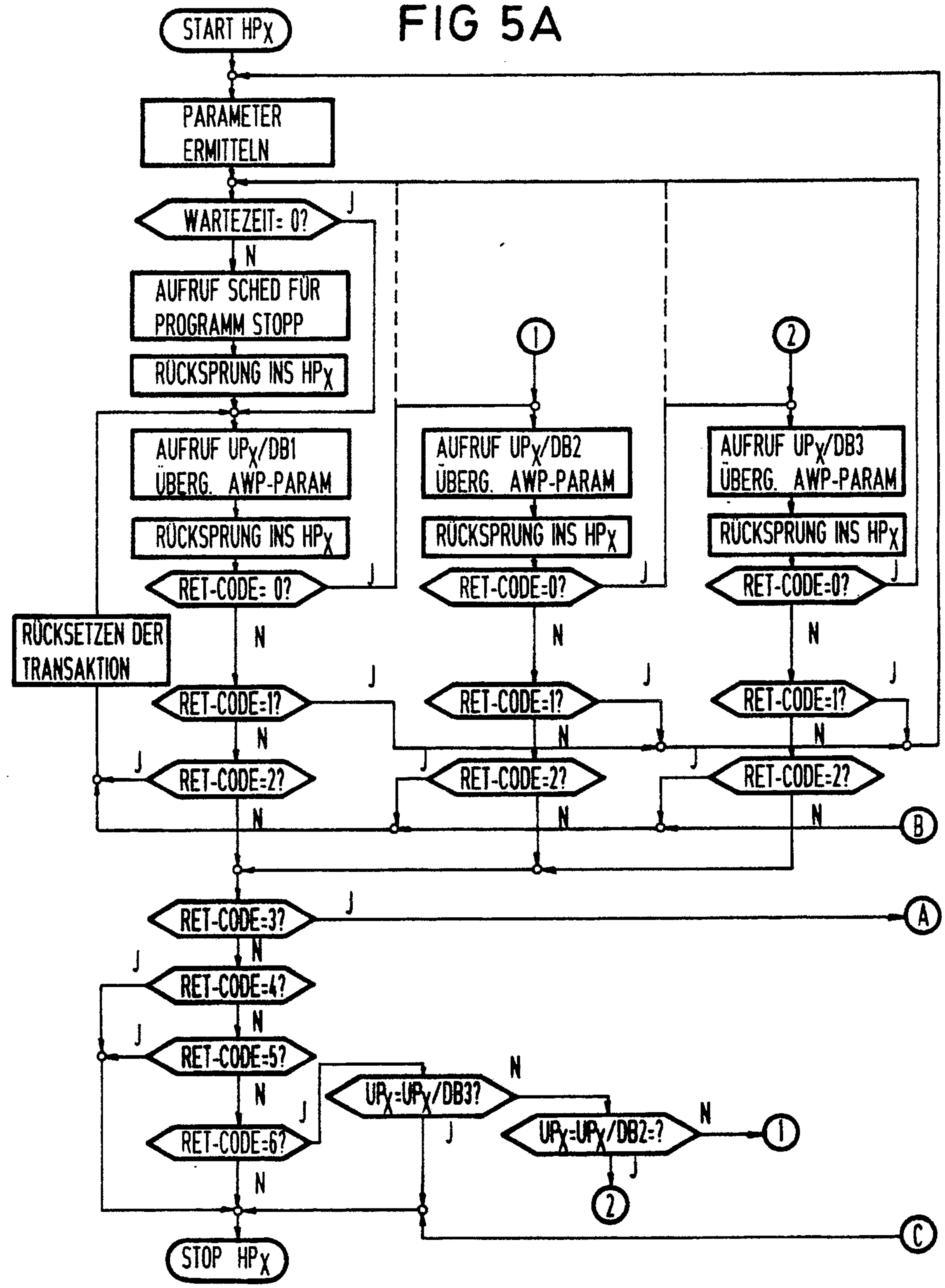
START HPX
PARAMETER ERMITTELN
WARTEZEIT= 0?
AUFRUF SCHED FÜR PROGRAMM STOPP
RÜCKSPRUNG INS HPX
AUFRUF UPX/DB1 ÜBERG. AWP-PARAM
RÜCKSPRUNG INS HPX
RET-CODE= 0?
RÜCKSETZEN DER TRANSAKTION
RET-CODE=1?
RET-CODE=2?
AUFRUF UPX/DB2 ÜBERG. AWP-PARAM
RÜCKSPRUNG INS HPX
RET-CODE=0?
RET-CODE=1?
RET-CODE=2?
AUFRUF UPX/DB3 ÜBERG. AWP-PARAM
RÜCKSPRUNG INS HPX
RET-CODE=0?
RET-CODE=1?
RET-CODE=2?
RET-CODE=3?
RET-CODE=4?
RET-CODE=5?
RET-CODE=6?
UPX=UPX/DB3?
UPX=UPX/DB2=?
STOP HPX
J
N
1
2
A
B
C

FIG 5B

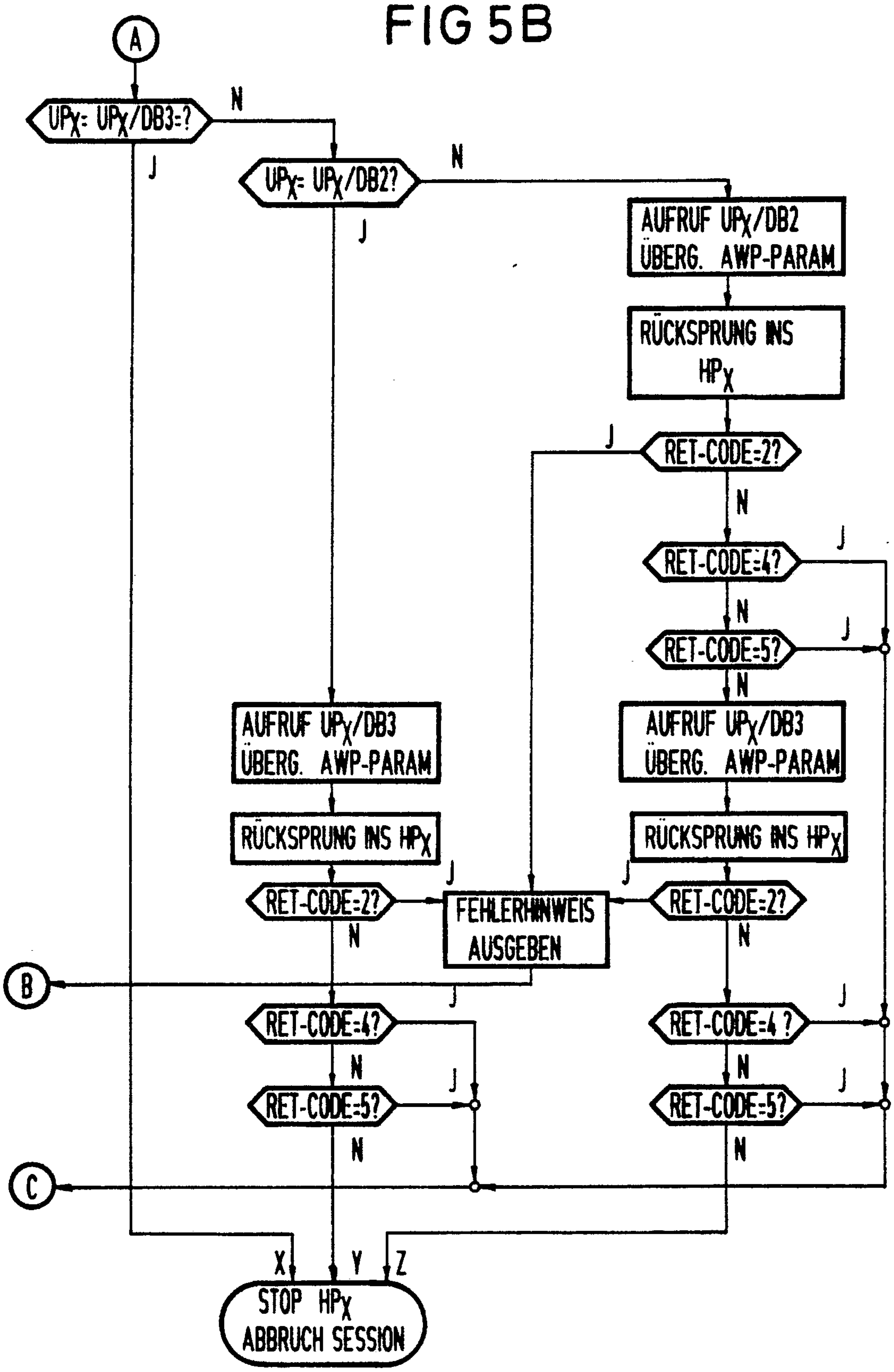
A
UPX: UPX/DB3=?
N
J
UPX: UPX/DB2?
N
J
AUFRUF UPX/DB2
ÜBERG. AWP-PARAM
RÜCKSPRUNG INS
HPX
J
RET-CODE=2?
N
J
RET-CODE=4?
N
J
RET-CODE=5?
N
AUFRUF UPX/DB3
ÜBERG. AWP-PARAM
RÜCKSPRUNG INS HPX
AUFRUF UPX/DB3
ÜBERG. AWP-PARAM
RÜCKSPRUNG INS HPX
J
RET-CODE=2?
N
FEHLERHINWEIS
AUSGEBEN
J
RET-CODE=2?
N
B
J
RET-CODE=4?
N
J
RET-CODE=5?
N
J
RET-CODE=4 ?
N
J
RET-CODE=5?
N
C
X
Y
Z
STOP HPX
ABBRUCH SESSION

FIG 6A

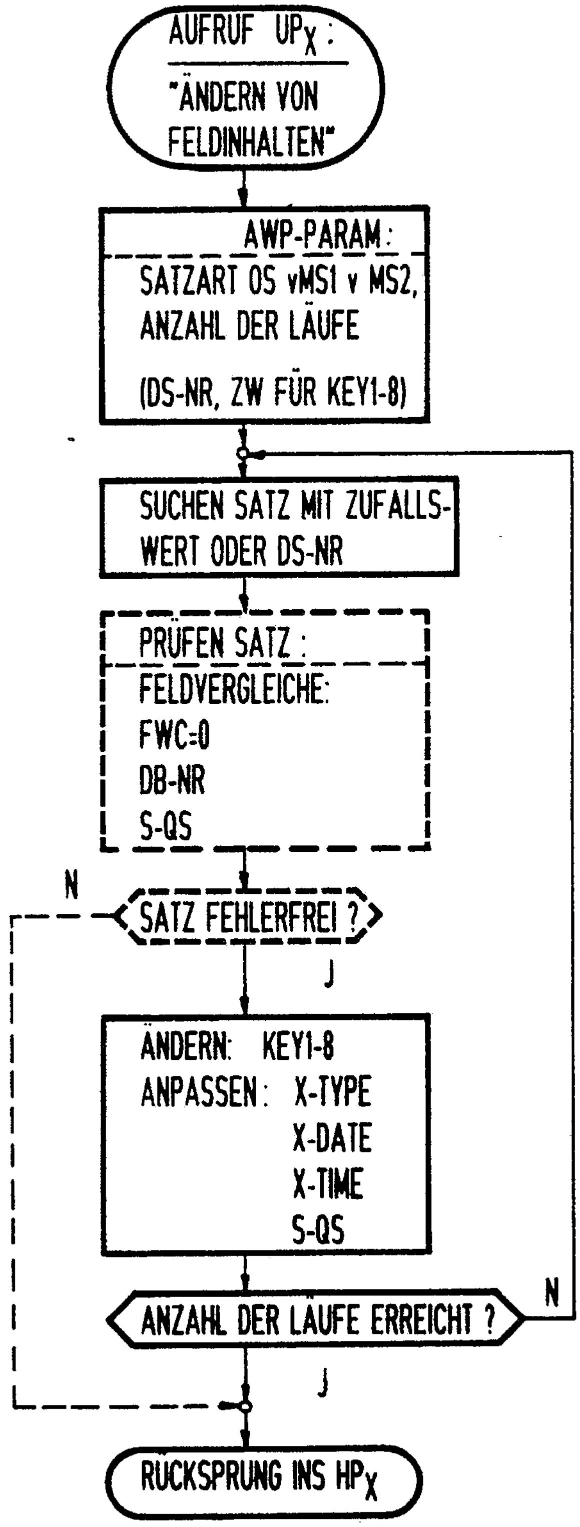
AUFRUF $UP_X$:
"ÄNDERN VON FELDINHALTEN"
AWP-PARAM:
SATZART OS vMS1 v MS2,
ANZAHL DER LÄUFE
(DS-NR, ZW FÜR KEY1-8)
SUCHEN SATZ MIT ZUFALLS-WERT ODER DS-NR
PRÜFEN SATZ:
FELDVERGLEICHE:
FWC=0
DB-NR
S-QS
SATZ FEHLERFREI ?
N
J
ÄNDERN: KEY1-8
ANPASSEN: X-TYPE
X-DATE
X-TIME
S-QS
ANZAHL DER LÄUFE ERREICHT ?
N
J
RÜCKSPRUNG INS $HP_X$

FIG6B

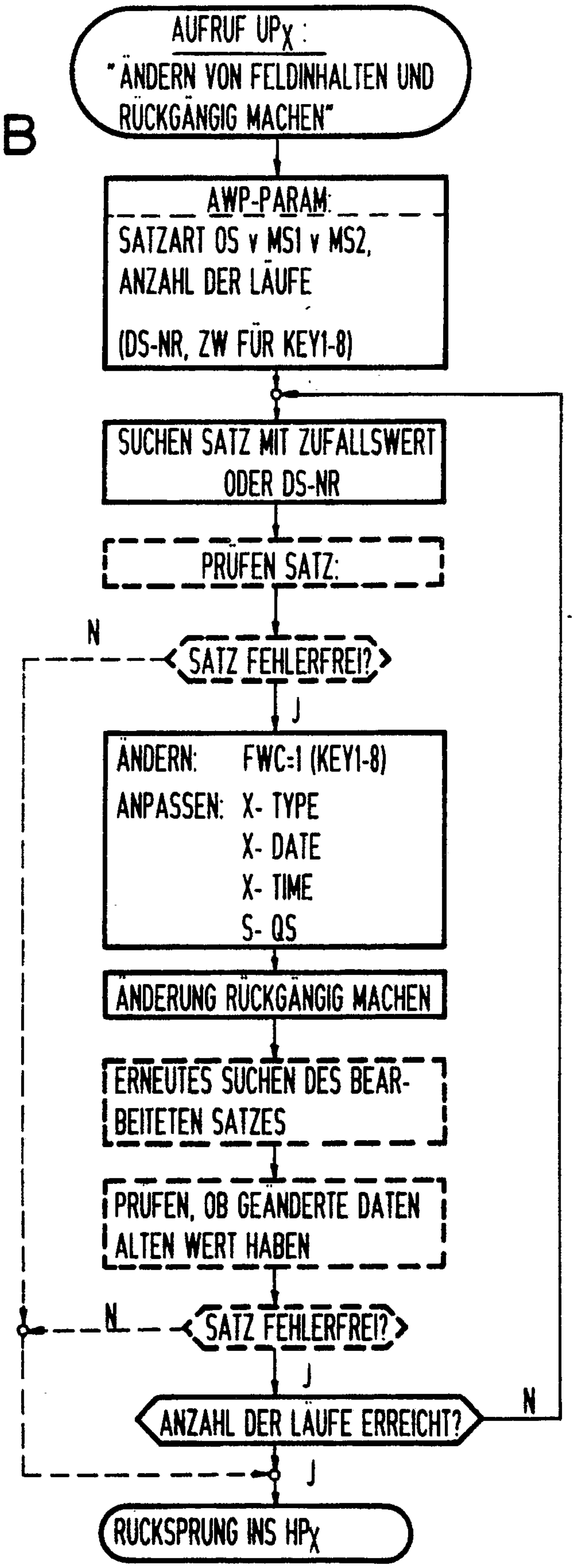
AUFRUF UPX :
"ÄNDERN VON FELDINHALTEN UND RÜCKGÄNGIG MACHEN"
AWP-PARAM:
SATZART OS v MS1 v MS2,
ANZAHL DER LÄUFE
(DS-NR, ZW FÜR KEY1-8)
SUCHEN SATZ MIT ZUFALLSWERT ODER DS-NR
PRÜFEN SATZ:
SATZ FEHLERFREI?
N
J
ÄNDERN: FWC:=1 (KEY1-8)
ANPASSEN: X- TYPE
X- DATE
X- TIME
S- QS
ÄNDERUNG RÜCKGÄNGIG MACHEN
ERNEUTES SUCHEN DES BEARBEITETEN SATZES
PRÜFEN, OB GEÄNDERTE DATEN ALTEN WERT HABEN
SATZ FEHLERFREI?
N
J
ANZAHL DER LÄUFE ERREICHT?
N
J
RÜCKSPRUNG INS HPX

FIG 6C

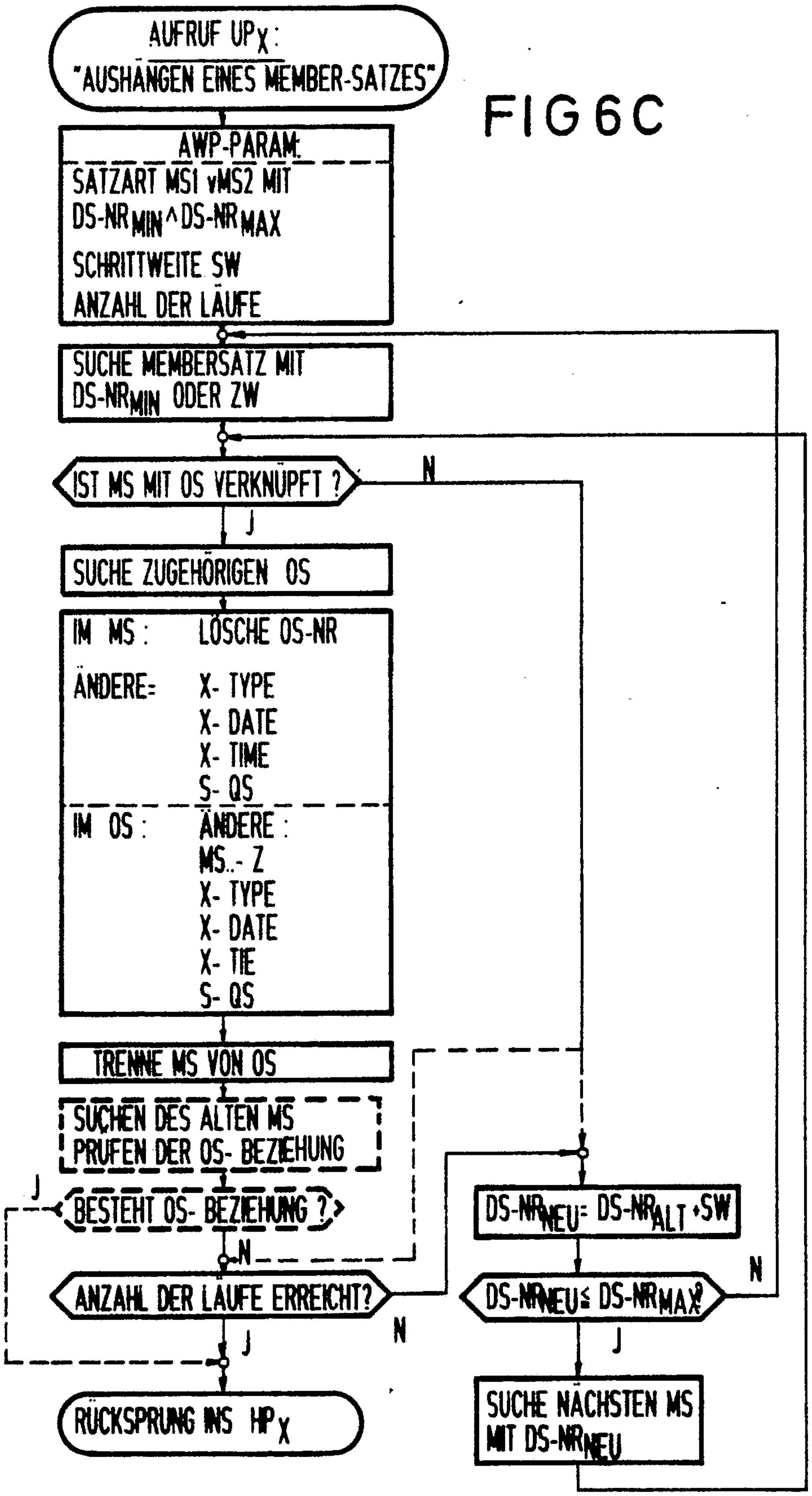
AUFRUF UPX:
"AUSHÄNGEN EINES MEMBER-SATZES"
AWP-PARAM:
SATZART MS1 vMS2 MIT
DS-NRMIN^DS-NRMAX
SCHRITTWEITE SW
ANZAHL DER LÄUFE
SUCHE MEMBERSATZ MIT
DS-NRMIN ODER ZW
IST MS MIT OS VERKNÜPFT ?
N
J
SUCHE ZUGEHÖRIGEN OS
IM MS: LÖSCHE OS-NR
ÄNDERE: X- TYPE
X- DATE
X- TIME
S- OS
IM OS: ÄNDERE:
MS.- Z
X- TYPE
X- DATE
X- TIE
S- OS
TRENNE MS VON OS
SUCHEN DES ALTEN MS
PRÜFEN DER OS- BEZIEHUNG
J
BESTEHT OS- BEZIEHUNG ?
N
ANZAHL DER LÄUFE ERREICHT?
N
J
RÜCKSPRUNG INS HPX
DS-NRNEU= DS-NRALT+SW
DS-NRNEU≤ DS-NRMAX?
N
J
SUCHE NÄCHSTEN MS
MIT DS-NRNEU

FIG6D

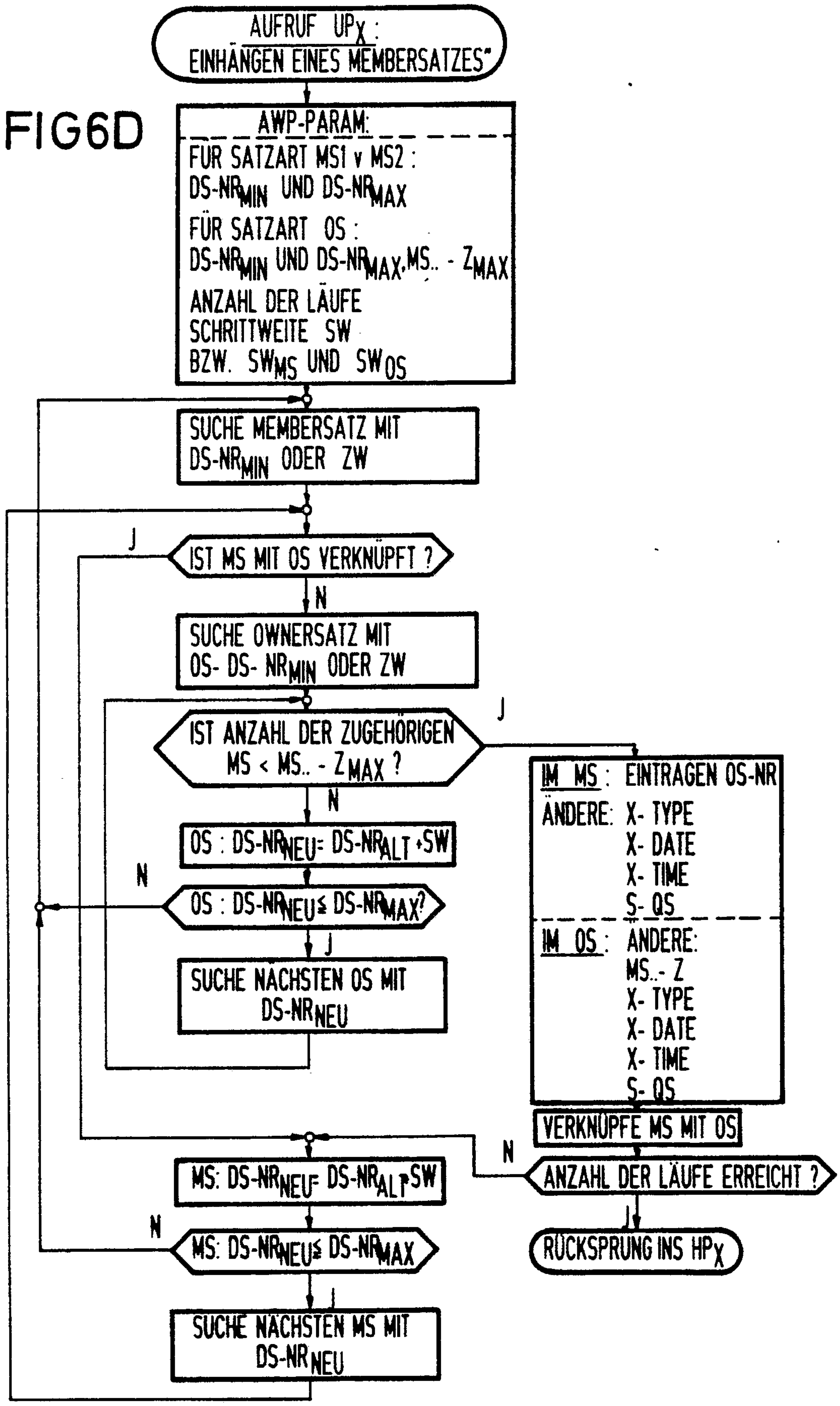
AUFRUF $UP_X$: EINHÄNGEN EINES MEMBERSATZES"
AWP-PARAM:
FÜR SATZART MS1 v MS2 :
$DS\text{-}NR_{MIN}$ UND $DS\text{-}NR_{MAX}$
FÜR SATZART OS :
$DS\text{-}NR_{MIN}$ UND $DS\text{-}NR_{MAX}$, MS.. - $Z_{MAX}$
ANZAHL DER LÄUFE
SCHRITTWEITE SW
BZW. $SW_{MS}$ UND $SW_{OS}$
SUCHE MEMBERSATZ MIT $DS\text{-}NR_{MIN}$ ODER ZW
IST MS MIT OS VERKNÜPFT ?
J
N
SUCHE OWNERSATZ MIT OS- DS- $NR_{MIN}$ ODER ZW
IST ANZAHL DER ZUGEHÖRIGEN MS < MS.. - $Z_{MAX}$ ?
J
N
OS : $DS\text{-}NR_{NEU}$ = $DS\text{-}NR_{ALT}$ + SW
OS : $DS\text{-}NR_{NEU} \leq DS\text{-}NR_{MAX}$?
N
J
SUCHE NÄCHSTEN OS MIT $DS\text{-}NR_{NEU}$
IM MS : EINTRAGEN OS-NR
ÄNDERE: X- TYPE
X- DATE
X- TIME
S- QS
IM OS : ÄNDERE:
MS.- Z
X- TYPE
X- DATE
X- TIME
S- QS
VERKNÜPFE MS MIT OS
ANZAHL DER LÄUFE ERREICHT ?
N
J
RÜCKSPRUNG INS $HP_X$
MS: $DS\text{-}NR_{NEU}$ = $DS\text{-}NR_{ALT}$ + SW
MS: $DS\text{-}NR_{NEU} \leq DS\text{-}NR_{MAX}$
N
J
SUCHE NÄCHSTEN MS MIT $DS\text{-}NR_{NEU}$

FIG6E

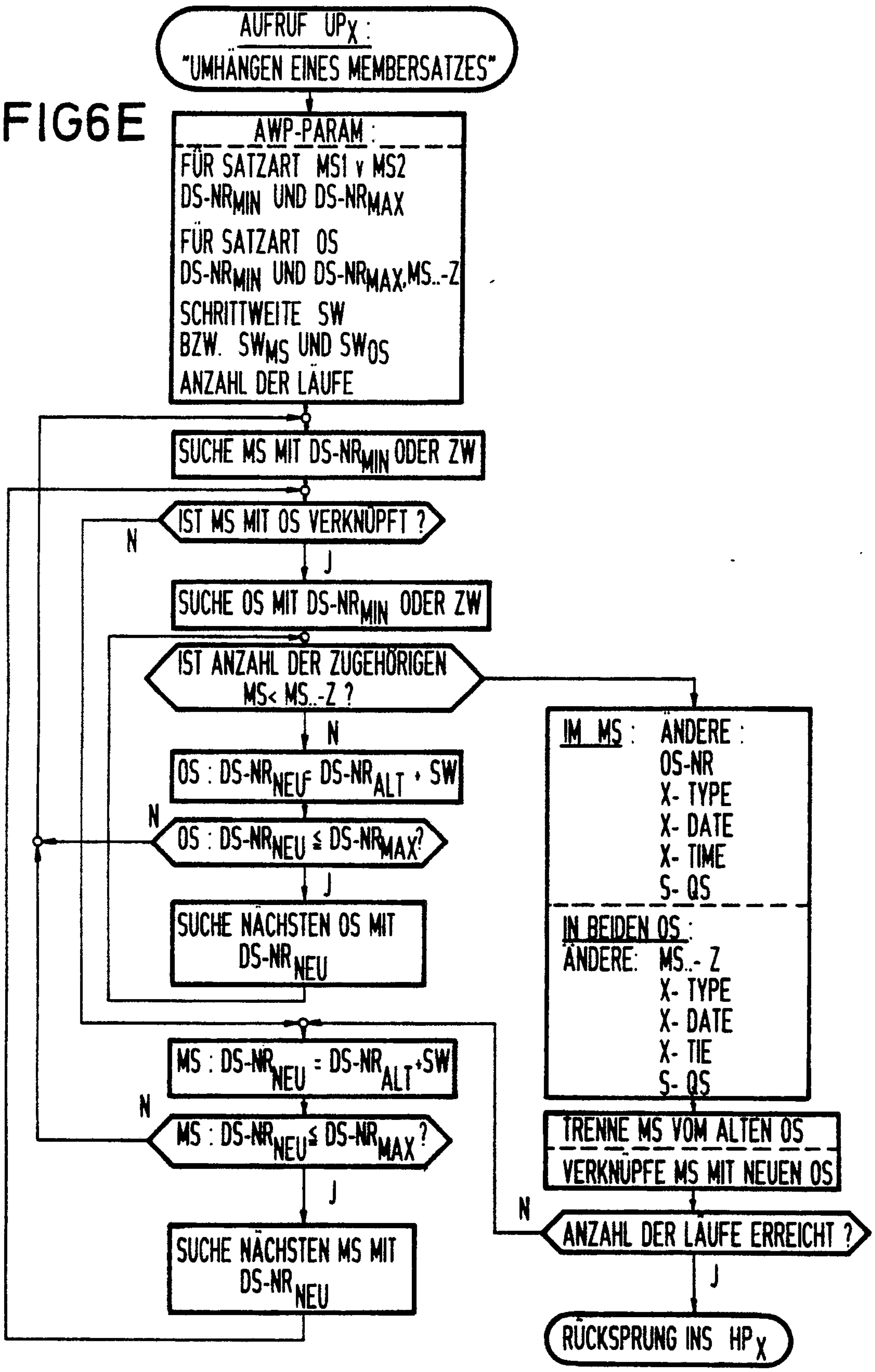
AUFRUF UPX :
"UMHÄNGEN EINES MEMBERSATZES"
AWP-PARAM :
FÜR SATZART MS1 v MS2
DS-NRMIN UND DS-NRMAX
FÜR SATZART OS
DS-NRMIN UND DS-NRMAX,MS..-Z
SCHRITTWEITE SW
BZW. SWMS UND SWOS
ANZAHL DER LÄUFE
SUCHE MS MIT DS-NRMIN ODER ZW
IST MS MIT OS VERKNÜPFT ?
N
J
SUCHE OS MIT DS-NRMIN ODER ZW
IST ANZAHL DER ZUGEHÖRIGEN MS< MS..-Z ?
N
OS : DS-NRNEU= DS-NRALT + SW
N
OS : DS-NRNEU ≤ DS-NRMAX?
J
SUCHE NÄCHSTEN OS MIT DS-NRNEU
IM MS : ÄNDERE :
OS-NR
X- TYPE
X- DATE
X- TIME
S- QS
IN BEIDEN OS :
ÄNDERE: MS..- Z
X- TYPE
X- DATE
X- TIE
S- QS
MS : DS-NRNEU = DS-NRALT+SW
N
MS : DS-NRNEU≤ DS-NRMAX ?
J
SUCHE NÄCHSTEN MS MIT DS-NRNEU
TRENNE MS VOM ALTEN OS
VERKNÜPFE MS MIT NEUEN OS
N
ANZAHL DER LÄUFE ERREICHT ?
J
RÜCKSPRUNG INS HPX

FIG 6F

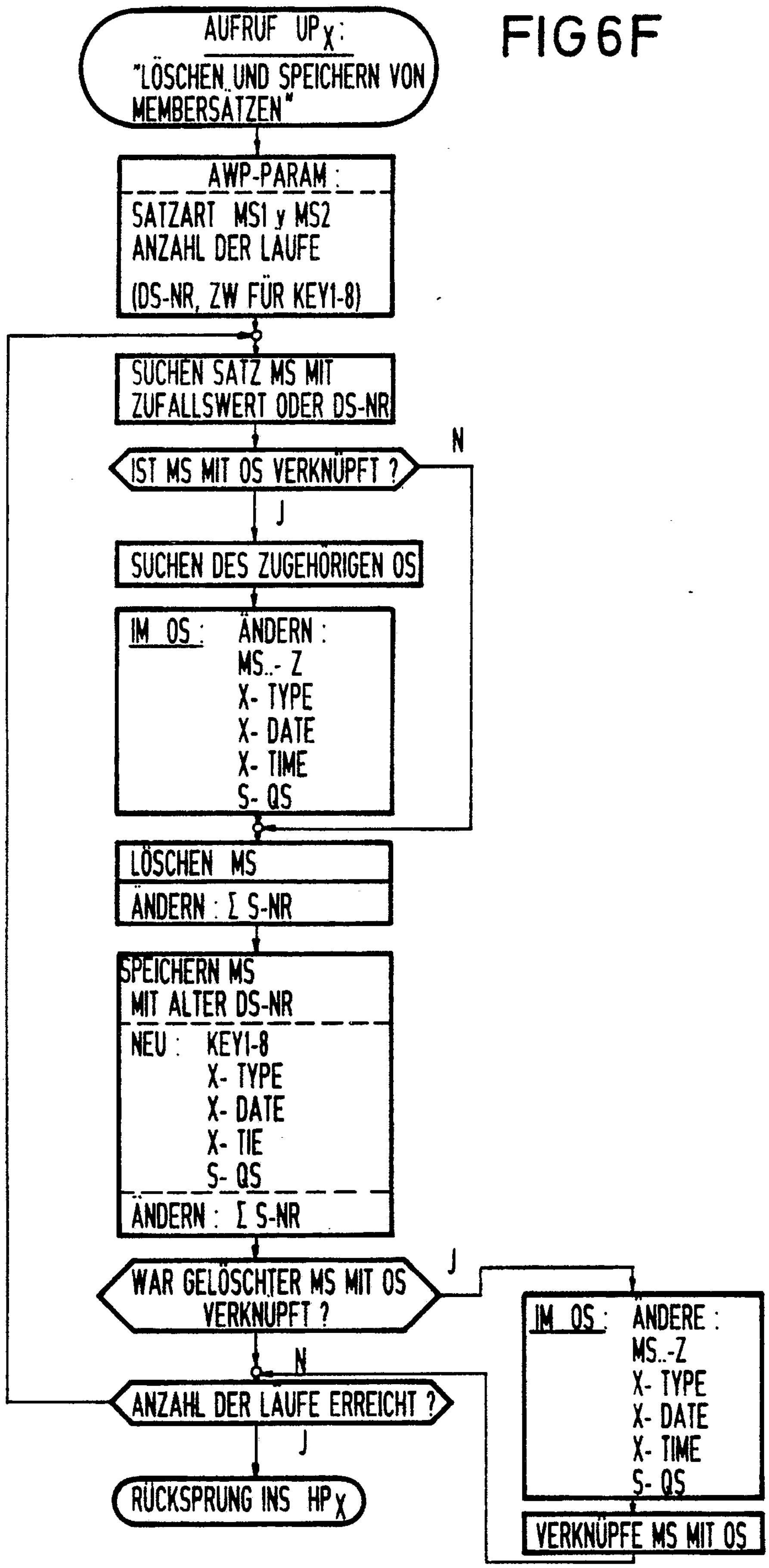
AUFRUF UPX:
"LÖSCHEN UND SPEICHERN VON MEMBERSÄTZEN"
AWP-PARAM:
SATZART MS1 y MS2
ANZAHL DER LÄUFE
(DS-NR, ZW FÜR KEY1-8)
SUCHEN SATZ MS MIT ZUFALLSWERT ODER DS-NR
IST MS MIT OS VERKNÜPFT ?
N
J
SUCHEN DES ZUGEHÖRIGEN OS
IM OS: ÄNDERN:
MS..-Z
X- TYPE
X- DATE
X- TIME
S- QS
LÖSCHEN MS
ÄNDERN: Σ S-NR
SPEICHERN MS MIT ALTER DS-NR
NEU: KEY1-8
X- TYPE
X- DATE
X- TIE
S- QS
ÄNDERN: Σ S-NR
WAR GELÖSCHTER MS MIT OS VERKNÜPFT ?
J
N
IM OS: ÄNDERE:
MS..-Z
X- TYPE
X- DATE
X- TIME
S- QS
VERKNÜPFE MS MIT OS
ANZAHL DER LÄUFE ERREICHT ?
J
RÜCKSPRUNG INS HPX

FIG 6 G

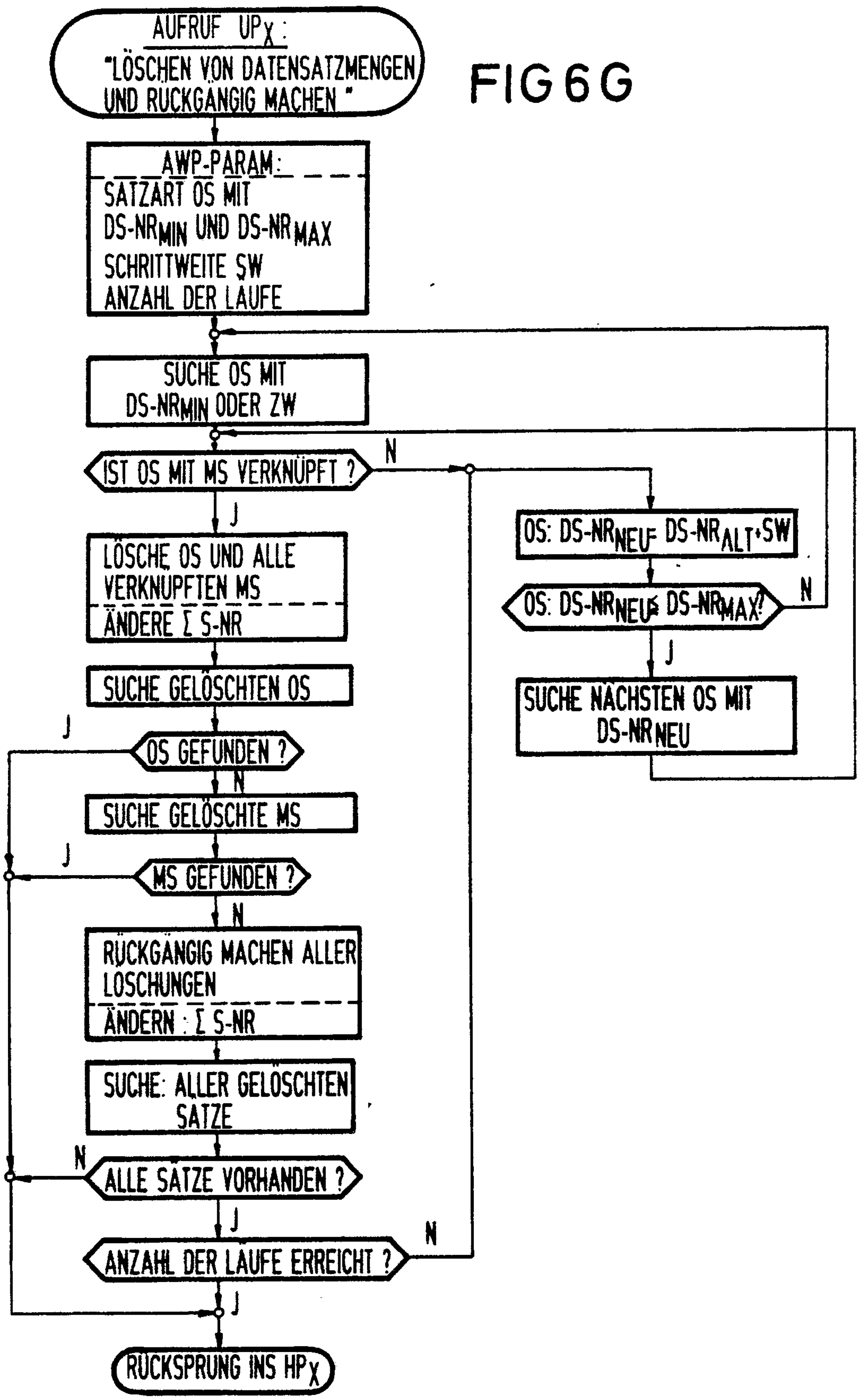
AUFRUF $UP_X$ :
"LÖSCHEN VON DATENSATZMENGEN UND RÜCKGÄNGIG MACHEN"
AWP-PARAM:
SATZART OS MIT
$DS\text{-}NR_{MIN}$ UND $DS\text{-}NR_{MAX}$
SCHRITTWEITE SW
ANZAHL DER LÄUFE
SUCHE OS MIT
$DS\text{-}NR_{MIN}$ ODER ZW
IST OS MIT MS VERKNÜPFT ?
N
J
LÖSCHE OS UND ALLE VERKNÜPFTEN MS
ÄNDERE Σ S-NR
SUCHE GELÖSCHTEN OS
OS GEFUNDEN ?
J
N
SUCHE GELÖSCHTE MS
MS GEFUNDEN ?
J
N
RÜCKGÄNGIG MACHEN ALLER LÖSCHUNGEN
ÄNDERN : Σ S-NR
SUCHE: ALLER GELÖSCHTEN SÄTZE
ALLE SÄTZE VORHANDEN ?
N
J
ANZAHL DER LÄUFE ERREICHT ?
N
J
RÜCKSPRUNG INS $HP_X$
OS: $DS\text{-}NR_{NEU} = DS\text{-}NR_{ALT} + SW$
OS: $DS\text{-}NR_{NEU} \leq DS\text{-}NR_{MAX}$?
N
J
SUCHE NÄCHSTEN OS MIT
$DS\text{-}NR_{NEU}$

FIG 6H

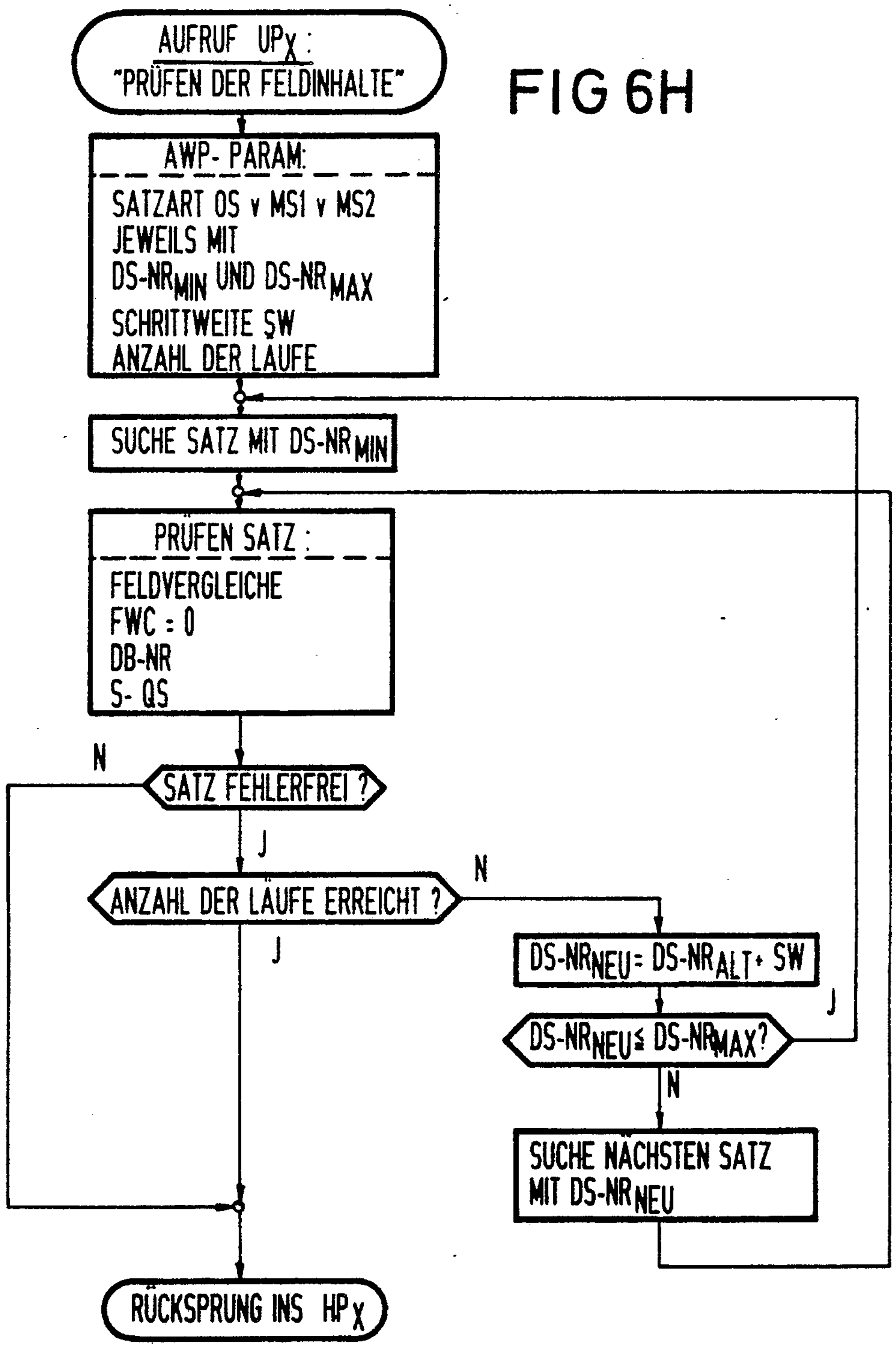
AUFRUF UPX :
"PRÜFEN DER FELDINHALTE"
AWP- PARAM:
SATZART OS v MS1 v MS2
JEWEILS MIT
DS-NRMIN UND DS-NRMAX
SCHRITTWEITE SW
ANZAHL DER LÄUFE
SUCHE SATZ MIT DS-NRMIN
PRÜFEN SATZ :
FELDVERGLEICHE
FWC : 0
DB-NR
S- QS
N
SATZ FEHLERFREI ?
J
N
ANZAHL DER LÄUFE ERREICHT ?
J
DS-NRNEU= DS-NRALT+ SW
J
DS-NRNEU≤ DS-NRMAX?
N
SUCHE NÄCHSTEN SATZ
MIT DS-NRNEU
RÜCKSPRUNG INS HPX

FIG6I

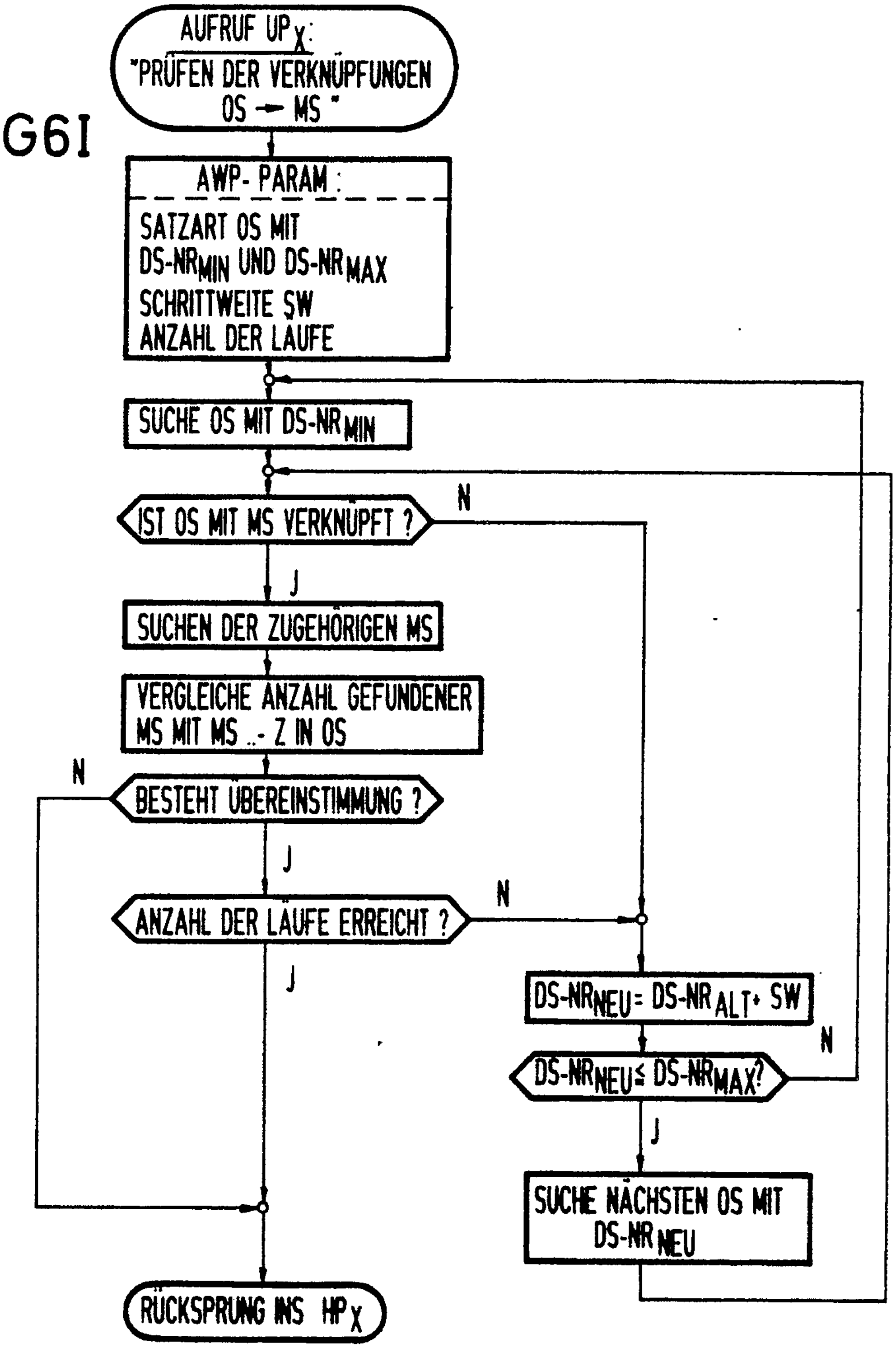
AUFRUF $UP_X$:
"PRÜFEN DER VERKNÜPFUNGEN
OS → MS"
AWP- PARAM :
SATZART OS MIT
$DS\text{-}NR_{MIN}$ UND $DS\text{-}NR_{MAX}$
SCHRITTWEITE SW
ANZAHL DER LÄUFE
SUCHE OS MIT $DS\text{-}NR_{MIN}$
IST OS MIT MS VERKNÜPFT ?
N
J
SUCHEN DER ZUGEHÖRIGEN MS
VERGLEICHE ANZAHL GEFUNDENER
MS MIT MS ..- Z IN OS
N
BESTEHT ÜBEREINSTIMMUNG ?
J
ANZAHL DER LÄUFE ERREICHT ?
N
J
$DS\text{-}NR_{NEU} = DS\text{-}NR_{ALT} + SW$
N
$DS\text{-}NR_{NEU} \leq DS\text{-}NR_{MAX}$?
J
SUCHE NÄCHSTEN OS MIT
$DS\text{-}NR_{NEU}$
RÜCKSPRUNG INS $HP_X$

FIG6K

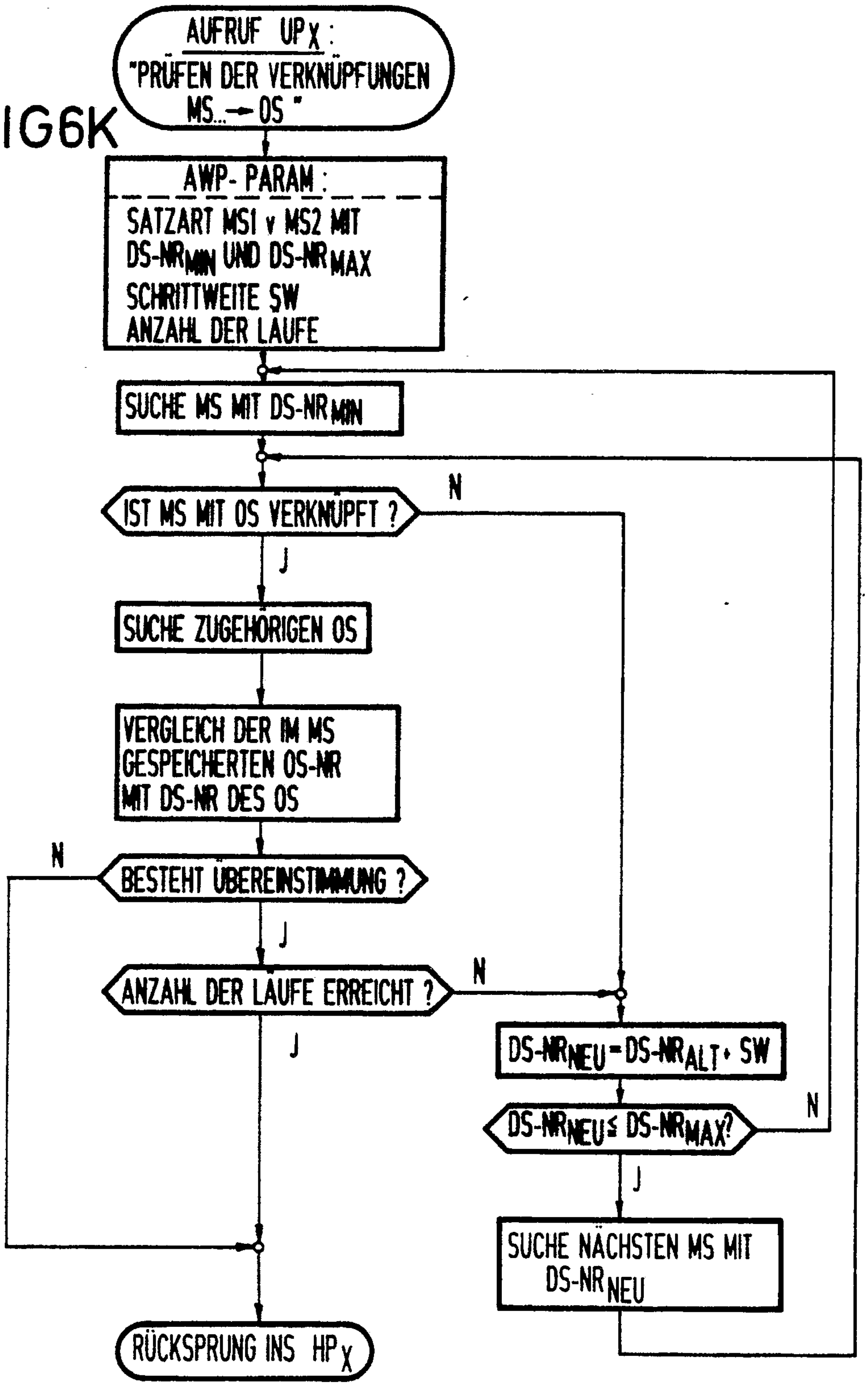
AUFRUF UPX:
"PRÜFEN DER VERKNÜPFUNGEN MS...→OS"
AWP-PARAM:
SATZART MS1 v MS2 MIT
DS-NRMIN UND DS-NRMAX
SCHRITTWEITE SW
ANZAHL DER LÄUFE
SUCHE MS MIT DS-NRMIN
IST MS MIT OS VERKNÜPFT ?
N
J
SUCHE ZUGEHÖRIGEN OS
VERGLEICH DER IM MS GESPEICHERTEN OS-NR MIT DS-NR DES OS
BESTEHT ÜBEREINSTIMMUNG ?
N
J
ANZAHL DER LÄUFE ERREICHT ?
N
J
DS-NRNEU=DS-NRALT+SW
DS-NRNEU≤DS-NRMAX?
N
J
SUCHE NÄCHSTEN MS MIT DS-NRNEU
RÜCKSPRUNG INS HPX